(19) Europäisches Patentamt
European Patent Office
Office européen des brevets

(11) **EP 2 983 362 B1**

(12) **EUROPEAN PATENT SPECIFICATION**

(45) Date of publication and mention
of the grant of the patent:
**28.10.2020 Bulletin 2020/44**

(21) Application number: **14780093.2**

(22) Date of filing: **07.04.2014**

(51) Int Cl.:
**H04N 19/30** (2014.01)          **H04N 19/187** (2014.01)

(86) International application number:
**PCT/KR2014/002997**

(87) International publication number:
**WO 2014/163454 (09.10.2014 Gazette 2014/41)**

(54) **INTERLAYER VIDEO DECODING METHOD AND APPARATUS FOR COMPENSATING LUMINANCE DIFFERENCE**

ZWISCHENSCHICHT-VIDEODECODIERUNGSVERFAHREN UND VORRICHTUNG ZUR KOMPENSATION DES LUMINANZUNTERSCHIEDS

PROCÉDÉ ET APPAREIL DE DÉCODAGE VIDÉO INTERCOUCHE ET APPAREIL PERMETTANT DE COMPENSER UNE DIFFÉRENCE DE LUMINANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2013 US 201361809039 P**

(43) Date of publication of application:
**10.02.2016 Bulletin 2016/06**

(73) Proprietor: **Samsung Electronics Co., Ltd.**
**Gyeonggi-do 16677 (KR)**

(72) Inventors:
• **PARK, Min-woo**
  **Hwaseong-si**
  **Gyeonggi-do 445-762 (KR)**
• **YOON, Jae-won**
  **Seoul 138-891 (KR)**
• **LEE, Jin-young**
  **Hwaseong-si**
  **Gyeonggi-do 445-828 (KR)**
• **CHOI, Byeong-doo**
  **Suwon-si**
  **Gyeonggi-do 443-725 (KR)**
• **WEY, Ho-cheon**
  **Seongnam-si**
  **Gyeonggi-do 463-705 (KR)**
• **CHO, Yong-jin**
  **Seoul 133-771 (KR)**

(74) Representative: **Appleyard Lees IP LLP**
**15 Clare Road**
**Halifax HX1 2HY (GB)**

(56) References cited:
WO-A2-2013/005941      KR-A- 20050 061 609
KR-A- 20080 052 344      KR-A- 20100 074 314
KR-A- 20120 135 752      KR-B1- 100 804 451

• PARK M W ET AL: "3D-CE5.h related: Simplification of illumination compensation", 104. MPEG MEETING; 22-4-2013 - 26-4-2013; INCHEON; (MOTION PICTURE EXPERT GROUP OR ISO/IEC JTC1/SC29/WG11),, no. m28945, 21 April 2013 (2013-04-21), XP030057478,
• TECH G ET AL: "3D-HEVC Test Model 2", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B1005, 23 December 2012 (2012-12-23), XP030130414,
• HONGBIN LIU ET AL: "3D-CE2.h : Results of Illumination Compensation for Inter-View Prediction", 102. MPEG MEETING; 15-10-2012 - 19-10-2012; SHANGHAI; (MOTION PICTURE EXPERT GROUP OR ISO/IEC JTC1/SC29/WG11),, no. m26731, 18 October 2012 (2012-10-18), XP030055063,

- LIU H ET AL: "3D-CE1.h related: Illumination Compensation for Inter-View Prediction", 1. JCT-3V MEETING; 101. MPEG MEETING; 16-7-2012 - 20-7-2012; STOCKHOLM; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-A0086, 11 July 2012 (2012-07-11) , XP030130085,

- MIKHAIL MISHUROVSKIY ET AL: "3D-CE2.a results on inter-view coding with adaptive luminance compensation", 2. JCT-3V MEETING; 102. MPEG MEETING; 13-10-2012 - 19-10-2012; SHANGHAI; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-B0031, 12 October 2012 (2012-10-12), XP030130212,

**Description**

TECHNICAL FIELD

The present invention relates to an interlayer video encoding method and apparatus and video decoding method and apparatus, and more particularly, a method of inducing brightness compensation parameters for compensating a brightness difference between interlayer images.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a coding unit according to a tree structure.

Image data of the space domain is transformed into coefficients of the frequency domain via frequency transformation. According to a video codec, an image is split into blocks having a predetermined size, discrete cosine transformation (DCT) is performed on each block, and frequency coefficients are encoded in block units, for rapid calculation of frequency transformation. Compared with image data of the space domain, coefficients of the frequency domain are easily compressed. In particular, since an image pixel value of the space domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

In particular, a method of adjusting a value of a reconstructed pixel as much as a SAO may be employed during an operation of encoding and decoding video so as to minimize an error between an original image and a reconstructed image.

According to a multi-layer video codec, a first layer video and one or more second layer video are encoded and decoded. Amounts of data of the first layer video and the second layer video(s) may be reduced by eliminating time/space redundancies and interlayer redundancies of the first layer video and the second layer video(s). Illumination compensation in inter-layer coding is disclosed in "3D-HEVC Test Model 2", JCT-3V meeting; 102nd MPEG meeting; 13-10-2012-19-10-2012; Shangai.

DETAILED DESCRIPTION OF THE INVENTION

TECHNICAL PROBLEM

To induce brightness compensation parameters, it is necessary to obtain values of pixels surrounding a first layer reconstructed block corresponding to a second layer current block. Here, a disparity vector may be used to find the first layer reconstructed block corresponding to the second layer current block.

However, since a disparity vector may exhibit a fractional unit precision, such as quarter-pel or half-pal, location indicated by a disparity vector at a location of a second layer current block may be location of a sub-pixel. However, to reduce complexity of brightness compensation, pixels around a second layer current block are compared to pixels around a first layer reference block as integer pixel, and thus location of a reference block should be determined as location of an integer pixel.

TECHNICAL SOLUTION

The present invention provides an interlayer video decoding method including determining whether to perform brightness compensation with respect to a second layer current block to be reconstructed by using a first layer reference block; determining first layer reference pixels by using the closest integer pixels to reference location of a first layer corresponding to location of reference pixels for the second layer current block based on whether to perform the brightness compensation; and determining brightness compensation parameters regarding the second layer current block by using the determined first layer reference pixels and pixels surrounding the second layer current block. The invention is set out in the set of amended claims.

ADVANTAGEOUS EFFECTS OF THE INVENTION

According to an embodiment of the present invention, there are provided an interlayer video decoding method in accordance with claim 1 and an interlayer video decoding apparatus in accordance with claim 5 that improve encoding efficiency by using the closest integer pixel when a reference location for inducing brightness compensation parameters is at a sub-pixel location in a multilayer image.

DESCRIPTION OF THE DRAWINGS

FIG. 1A is a block diagram of an interlayer video encoding apparatus according to various embodiments of the present invention;

FIG. 1B is a flowchart of an interlayer video encoding method according to various embodiments of the present invention;

FIG. 2A is a block diagram of an interlayer video decoding apparatus according to various embodiments of the present invention;

FIG. 2B is a flowchart of an interlayer video decoding method according to various embodiments of the present invention;

FIG. 3 is a diagram showing an inter-layer prediction structure according to an embodiment;

FIG. 4 is a diagram showing a method of determining brightness compensation parameters according to an embodiment;

FIGS. 5A and 5B are diagrams showing examples of determining close integer pixels indicated by disparity vectors, according to embodiments of the present invention;

FIG. 6A is a flowchart of a method of determining reference pixels for inducing brightness compensation parameters according to an embodiment;

FIG. 6B is a flowchart of a method of determining reference pixels for inducing brightness compensation parameters, according to another embodiment;

FIG. 7 is a flowchart of a method of determining reference pixels for inducing brightness compensation parameters, according to another embodiment;

FIG. 8 is a block diagram of a video encoding apparatus based on coding units according to a tree structure, according to one or more embodiments;

FIG. 9 is a block diagram of a video decoding apparatus based on coding units having a tree structure, according to one or more embodiments;

FIG. 10 is a diagram for describing a concept of coding units according to one or more embodiments;

FIG. 11 is a block diagram of an image encoder based on coding units, according to one or more embodiments;

FIG. 12 is a block diagram of an image decoder based on coding units, according to one or more embodiments;

FIG. 13 is a diagram illustrating deeper coding units according to depths, and partitions, according to one or more embodiments;

FIG. 14 is a diagram for describing a relationship between a coding unit and transformation units, according to one or more embodiments;

FIG. 15 is a diagram for describing encoding information of coding units corresponding to a depth, according to one or more embodiments;

FIG. 16 is a diagram of deeper coding units according to depths, according to one or more embodiments;

FIGS. 17, 18, and 19 are diagrams for describing a relationship between coding units, prediction units, and transformation units, according to one or more embodiments;

FIG. 20 is a diagram for describing a relationship between a coding unit, a prediction unit, and a transformation unit, according to encoding mode information of Table 1;

FIG. 21 is a diagram of a physical structure of the disc in which a program is stored, according to one or more embodiments;

FIG. 22 is a diagram of a disc drive for recording and reading a program by using the disc;

FIG. 23 is a diagram of an overall structure of a content supply system for providing a content distribution service;

FIGS. 24 and 25 are diagrams showing an external structure and an internal structure of the mobile phone to which a video encoding method and a video decoding method are applied, according to one or more embodiments;

FIG. 26 is a diagram showing a digital broadcasting system employing a communication system, according to one or more embodiments; and

FIG. 27 is a diagram illustrating a network structure of a cloud computing system using a video encoding apparatus and a video decoding apparatus, according to one or more embodiments.

BEST MODE

According to an embodiment of the present invention, an interlayer video decoding method includes determining whether to perform brightness compensation with respect to a second layer current block to be reconstructed by using a first layer reference block; determining first layer reference pixels by using the closest integer pixels to reference location of a first layer corresponding to location of reference pixels for the second layer current block based on whether to perform the brightness compensation; and determining brightness compensation parameters regarding the second layer current block by using the determined first layer reference pixels and pixels surrounding the second layer current block.

the determining of the reference pixels includes obtaining a disparity vector indicating the reference location of the first layer corresponding to locations of reference pixels for the second layer current block to be brightness compensated; and selecting the closest integer pixels to the reference location of the first layer indicated by the obtained disparity vector.

the determining of the reference pixels includes transforming the obtained disparity vector to an integer disparity vector; and determining a location indicated by the integer disparity vector as location of the reference pixel.

the transforming of the disparity vector to the integer disparity vector includes transforming the obtained disparity vector to indicate an integer pixel by performing a particular shift calculation with respect to coordinates of the reference location of the first layer indicated by the obtained disparity vector.

the reference pixels of the second layer current block are pixels indicating location of the second layer current block.

the determining of the reference pixels includes determining the closest integer pixels to the reference location of the first layer corresponding to locations of pixels at the upper-left corner of the second layer current block as locations of pixels at the upper-left corner of a first layer reference block; and determining pixels surrounding the determine first layer reference block as the reference pixels.

the reference pixels for the second layer current block are pixels surrounding the second layer current block, and, in the determining of the first layer reference pixels, locations of the integer pixels as the locations of the reference pixels.

the reference pixels for the second layer current block are pixels surrounding the second layer current block, and the determining of the first layer reference pixels includes obtaining at least one integer pixel close to the reference location of the first layer; and determining reference pixel values of the reference location of the first layer by using the obtained at least one integer pixel.

According to another embodiment of the present invention, an interlayer video encoding method includes determining whether to perform brightness compensation with respect to a second layer current block to be reconstructed by using a first layer reference block; if it is determined to perform the brightness compensation, determining first layer reference pixels by using the closest integer pixel to reference location of a first layer corresponding to locations of reference pixels for the second layer current block; and inducing brightness compensation parameters regarding the second layer current block by using the determined first layer reference pixels and pixels surrounding the second layer current block.

the determining of the reference pixels includes obtaining a disparity vector indicating the reference location of the first layer corresponding to locations of reference pixels for the second layer current block to be brightness compensated; and selecting the closest integer pixels to the reference location of the first layer indicated by the obtained disparity vector.

the determining of the reference pixels includes transforming the obtained disparity vector to an integer disparity vector; and determining a location indicated by the integer disparity vector as location of the reference pixel.

the reference pixels of the second layer current block are pixels indicating location of the second layer current block.

the determining of the reference pixels includes determining the closest integer pixels to the reference location of the first layer corresponding to locations of pixels at the upper-left corner of the second layer current block as locations of pixels at the upper-left corner of a first layer reference block; and determining pixels surrounding the determine first layer reference block as the reference pixels.

the reference pixels for the second layer current block are pixels surrounding the second layer current block, and, in the determining of the first layer reference pixels, locations of the integer pixels as the locations of the reference pixels.

the reference pixels for the second layer current block are pixels surrounding the second layer current block, and the determining of the first layer reference pixels includes obtaining at least one integer pixel close to the reference location of the first layer; and determining reference pixel values of the reference location of the first layer by using the obtained at least one integer pixel.

According to another embodiment of the present invention, an interlayer video decoding apparatus includes a brightness compensation determiner, which determines whether to perform brightness compensation with respect to a second layer current block to be reconstructed by using a first layer reference block; a reference pixel determiner, which determines first layer reference pixels by using the closest integer pixels to reference location of a first layer corresponding to location of reference pixels for the second layer current block based on whether to perform the brightness compensation; and a brightness compensation parameters determining unit, which determines brightness compensation parameters regarding the second layer current block by using the determined first layer reference pixels and pixels surrounding the second layer current block.

According to another embodiment of the present invention, an interlayer video encoding apparatus includes a brightness compensation determiner, which determines whether to perform brightness compensation with respect to a second layer current block to be encoded by using a first layer reference block; a reference pixel determiner, which determines first layer reference pixels by using the closest integer pixels to reference location of a first layer corresponding to location of reference pixels for the second layer current block based on whether to perform the brightness compensation; and a brightness compensation parameters determining unit, which determines brightness compensation parameters regarding the second layer current block by using the determined first layer reference pixels and pixels surrounding the second layer current block.

According to another embodiment of the present invention, there are provided non-transitory computer readable recording medium having recorded thereon a computer program for implementing a method according to an embodiment.

## MODE OF THE INVENTION

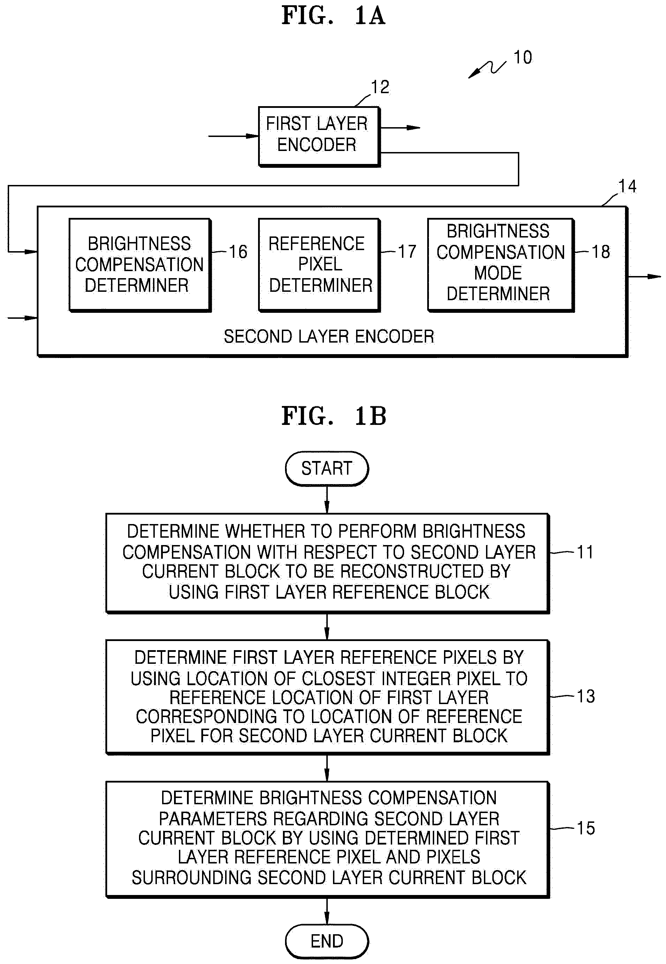

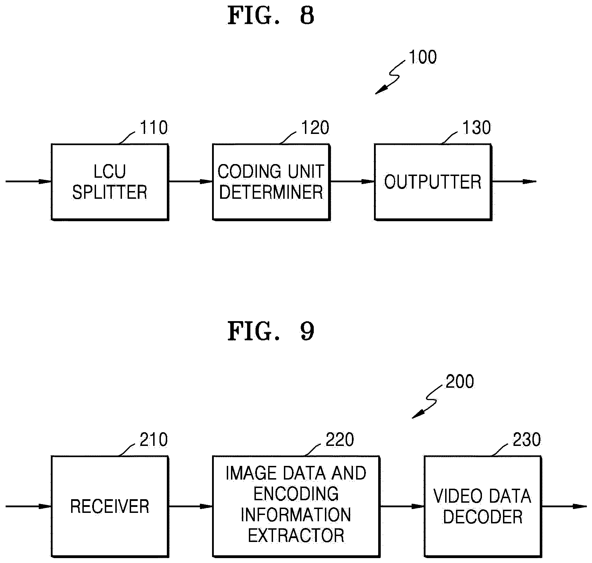

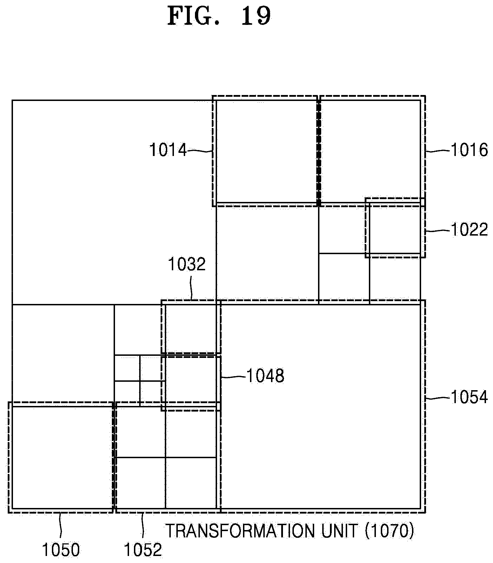

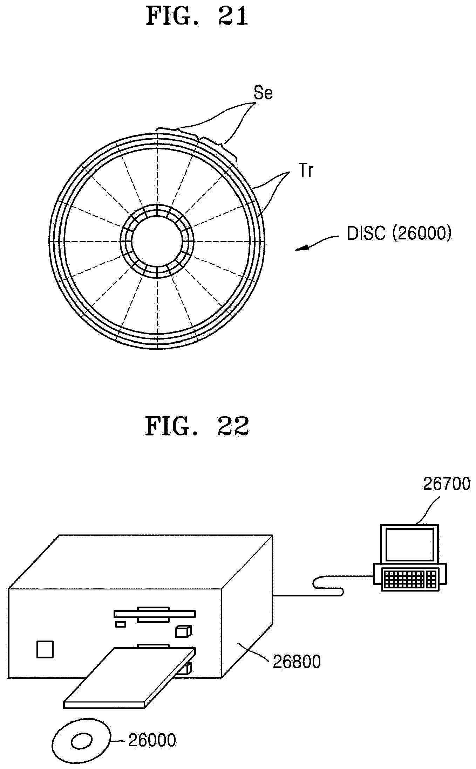

Hereinafter, referring to FIGS. 1A to 7, an interlayer video encoding method and an interlayer video decoding method in which it is determined whether to compensate brightness based on block characteristics according to various embodiments will be suggested. Furthermore, referring to FIGS. 8 to 20, a video encoding method and a video decoding method based on encoding structures with tree structures according to various embodiments that may be applied to the interlayer video encoding method and the interlayer video decoding method are disclosed. Furthermore, referring to FIGS. 21 to 27, various embodiments to which the video encoding method and the video decoding method may be applied are disclosed.

Hereinafter, the term 'image' may refer to a still image of a video or a moving picture, that is, the video itself.

Hereinafter, the term 'sample' refers to data allocated to a sampling location of an image and refers to data to be processed. For example, in an image in space domain, pixels may be samples.

First, referring to FIGS. 1A to 7, an interlayer video encoding apparatus and an interlayer video encoding method and an interlayer video decoding apparatus and an interlayer video decoding method will be disclosed.

FIG. 1A is a block diagram of an interlayer video encoding apparatus 10 according to various embodiments of the present invention. FIG. 1B is a flowchart of an interlayer video encoding method according to various embodiments of the present invention.

The interlayer video encoding apparatus 10 according to various embodiments of the present invention includes a first layer encoder 12 and a second layer encoder 14. The second layer encoder 14 may include a brightness compensation determiner 16, a reference pixel determiner 17, and a brightness compensation mode determiner 18. The brightness compensation determiner 16, the reference pixel determiner 17, and the brightness compensation mode determiner 18 may be arranged outside the second layer encoder 14.

The interlayer video encoding apparatus 10 according to various embodiments of the present invention may categorize a plurality of image sequences by layers according to a scalable video coding method, encode the categorized image sequences, and output independent streams including encoded data for the respective layers. The interlayer video encoding apparatus 10 may encode a first layer image sequence and a second layer image sequence to different layers.

The first layer encoder 12 may encode first layer images and output a first layer stream including encoded data of the first layer images.

The second layer encoder 14 may encode second layer images and output a second layer stream including encoded data of the second layer images.

For example, according to a scalable video coding method based on spatial scalability, low-resolution images may be encoded as first layer images, whereas high-resolution images may be encoded as second layer images. A result of encoding the first layer images may be output as a first layer stream, whereas a result of encoding the second layer images may be output as a second layer stream.

In another example, a multi-viewpoint video may be encoded according to a scalable video coding method. In this case, center viewpoint images may be encoded as first layer images, whereas left viewpoint images and right viewpoint images may be encoded as second layer images that refer to the first layer images. Alternatively, if the interlayer video encoding apparatus 10 allows three or more layers including a first layer, a second layer, and a third layer, center viewpoint images may be encoded as first layer streams, left viewpoint images may be encoded as second layer images, and right viewpoint images may be encoded as third layer images. However, the present invention is not limited thereto, and layers formed by encoding center viewpoint images, left viewpoint images, and right viewpoint images and layers to be referred to may be changed.

In another example, a scalable video coding method may be performed according to a temporal hierarchical prediction based on temporal scalability. A first layer stream including encoded data generated by encoding images of a basic frame rate may be output. Temporal layers may be classified by frame rate, and the respective temporal layer may be encoded as respective layers. Images of high frame rates may be further encoded by referring to images of a basic frame rate, thereby outputting a second layer stream including encoded data regarding the high frame rates.

Furthermore, a scalable video coding may be performed with respect to a first layer and a plurality of second layers. If there are three or more second layers, first layer images, first second layer images, second second layer images, ..., and $K^{th}$ second layer images may be encoded. Therefore, a result of encoding the first layer images may be output to a first layer stream, whereas a result of encoding first, second, ..., and $K^{th}$ second layer images may be output to first, second, ..., and $K^{th}$ second layer streams, respectively.

The interlayer video encoding apparatus 10 according to various embodiments of the present invention may perform inter prediction for predicting a current image by referring to images of single layers. Via inter prediction, a motion vector indicating information regarding a motion between a current image and a reference image and a residual between the current image and the reference image may be generated.

Furthermore, the interlayer video encoding apparatus 10 may perform inter-layer prediction for predicting second layer images by referring to first layer images.

Furthermore, if the video encoding apparatus 100 according to an embodiment allows three or more layers, such as a first layer, a second layer, and a third layer, the interlayer video encoding apparatus 10 may perform inter-layer prediction between one first layer image and a third layer image and inter-layer prediction between a second layer image and a third layer image, according to a multi-layer prediction structure.

Via inter-layer prediction, a location difference between a current image and a reference image of another layer and a residual between the current image and the reference image of the other layer may be generated.

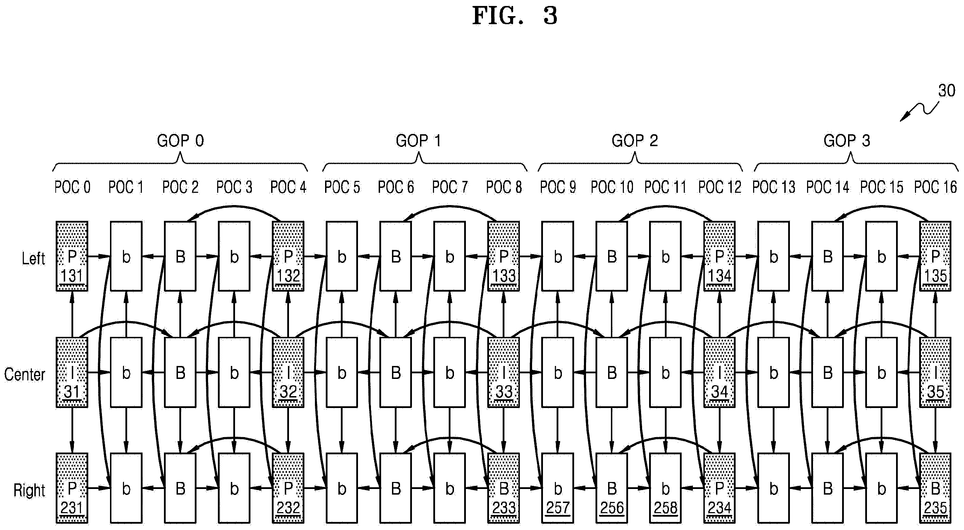

Inter-layer prediction structure will be described below in detail with reference to FIG. 3.

The interlayer video encoding apparatus 10 according to various embodiments of the present invention encodes blocks of each image of a video at each layer. Shape of a block may be a square, a rectangle, or an arbitrary geometrical shape. A block is not limited to a data unit having a certain size. From among coding units according to a tree structure, a block may be a largest coding unit (LCU), a coding unit, a prediction unit, a transformation unit, etc. A LCU including coding units according to a tree structure may be referred to as a coding tree unit, a coding block tree, a block tree, a root block tree, a coding tree, a coding root, a tree trunk, etc. Video encoding and decoding methods based on coding units according to a tree structure will be described below with reference to FIGS. 8 to 20.

Inter prediction and inter-layer prediction may also be performed based on data units, such as coding units, prediction units, or transformation units.

The first layer encoder 12 according to various embodiments of the present invention may generate symbol data by performing a source coding operation including inter prediction or intra prediction with respect to first layer images. Symbol data refers to sample values of respective coding parameters and sample values of residuals.

For example, the first layer encoder 12 may generate symbol data by performing inter prediction or intra prediction, transformation, and quantization to samples of data units of first layer images and generate a first layer stream by performing entropy encoding with respect to the symbol data.

The second layer encoder 14 may encode second layer images based on coding units according to a tree structure. The second layer encoder 14 may generate symbol data by performing inter prediction or intra prediction, transformation, and quantization to samples of data units of second layer images and generate a second layer stream by performing entropy encoding with respect to the symbol data.

The second layer encoder 14 according to various embodiments of the present invention may perform inter-layer prediction for estimating second layer streams by using a reconstructed sample of a first layer image. To encode a second layer original image from a second layer image sequence via an inter-layer prediction structure, the second layer encoder 14 may generate a second layer prediction image by using a first layer reconstructed image and encode a prediction error between the second layer original image and the second layer prediction image.

The second layer encoder 14 may perform inter prediction with respect to a second layer image by block, e.g., a coding unit or a prediction unit. A block of a first layer image to be referred to by a block of a second layer image may be determined. For example, a reconstructed block of a first layer image located in correspondence to location of a current block in a second layer image may be determined. The second layer encoder 14 may determine a second layer prediction block by using a first layer reconstructed block corresponding to a second layer block.

The second layer encoder 14 may use a second layer prediction block determined by using a first layer reconstructed block according to an inter-layer prediction structure as a reference image for inter-layer prediction of a second layer original block. The second layer encoder 14 may convert and quantize an error between a sample value of a second layer prediction block and a sample value of a second layer original block, that is, a residual based on inter-layer prediction, thereby entropy-encoding the same.

As described above, the second layer encoder 14 may encode a current layer image sequence by referring to first layer reconstructed images via an inter-layer prediction structure. However, the second layer encoder 14 according to various embodiments of the present invention may be able to encode a second layer image sequence according to a single layer prediction structure without referring to samples of other layers. Therefore, it should not be limitedly understood that the second layer encoder 14 performs only inter-layer prediction for encoding a second layer image sequence.

If the interlayer video encoding apparatus 10 encodes a multi-viewpoint video as described above, the first layer encoder 12 may encode a first viewpoint video, whereas the second layer encoder 14 may encode a second viewpoint video. Videos of respective viewpoints may be captured via different cameras or may be obtained via different lenses. Since capturing angles, illuminations, or characteristics of capturing devices (cameras, lenses) may differ from one viewpoint to another, brightness of videos obtained in respective viewpoints may not match to one another. Such illumination mismatch may be related to differences between sample values of videos of respective viewpoints.

If brightness of videos of respective viewpoints are not consistent to each other, an inter-layer prediction error becomes greater, and thus encoding efficiency may be deteriorated. Therefore, in consideration of brightness inconsistency between viewpoints, the second layer encoder 14 of the interlayer video encoding apparatus 10 may compensate and encode a brightness difference between videos of respective viewpoints. For example, a brightness difference between a first viewpoint image encoded by the first layer encoder 12 and a second viewpoint image encoded by the second layer encoder 14 may be encoded. Since the brightness difference of the second viewpoint image with respect to the first viewpoint image is encoded, brightness compensation may be performed when the second layer encoder 14 encodes a second viewpoint video.

In order to compensate a brightness difference between a first layer block and a second layer block, brightness compensation parameters may be used. For example, as shown in Equation 1 below, a result P' of performing brightness compensation with respect to a pixel P of a current block corresponding to another layer by using a scale factor a and an offset b may be obtained.

[Equation 1]

$$P^{\wedge'} = a \times P + b$$

Brightness compensation parameters for compensating brightness difference between blocks including scale factors and offsets may be included in a bitstream and transmitted or may be induced by using values of pixels around a second layer current block and values of pixels around a first layer reconstructed block corresponding to the current block.

Incidentally, in order to induce brightness compensation parameters according to an embodiment, it is necessary to obtain pixels around a first layer reconstructed block corresponding to a second layer current block. Here, a disparity vector may be used to find the first layer reconstructed block corresponding to the second layer current block. Here, a disparity vector may be included in a bitstream and transmitted or may be induced from other encoding information.

However, since a disparity vector may exhibit a fractional unit precision, such as quarter-pel or half-pal, location indicated by a disparity vector at a location of a second layer current block may be location of a sub-pixel. However, to reduce complexity of brightness compensation, pixels around a second layer current block are compared to pixels around a first layer reference block as integer pixel, and thus location of a reference block should be determined as location of an integer pixel.

Therefore, the interlayer video encoding apparatus 10 according to an embodiment may determine first layer reference pixels for inducing brightness compensation parameters by using the closest integer pixels to reference location of a first layer reconstructed image corresponding to locations of reference pixels for location of a second layer current block.

For example, the interlayer video encoding apparatus 10 may determine locations of the closest integer pixels to reference location of a first layer reconstructed image corresponding to location of a second layer current block as location of a reference block and may determine a block around the reference block as first layer reference pixels for inducing brightness compensation parameters.

In another example, the interlayer video encoding apparatus 10 may determine the closest integer pixels to reference location of a first layer reconstructed image corresponding to locations of pixels surrounding a second layer current block as first layer reference pixels for inducing brightness compensation parameters.

Hereinafter, an operation of the interlayer video encoding apparatus 10 for determining brightness compensation parameters will be described in detail with reference to FIG. 1B.

FIG. 1B is a flowchart of an interlayer video encoding method according to various embodiments of the present invention.

In an operation 11, the brightness compensation determiner 16 may determine whether to perform brightness compensation with respect to a second layer current block to be reconstructed by using a first layer reference block.

Since a residual between layers is predicted in an inter-layer prediction structure, an operation for predicting brightness difference between layers may increase a calculation amount. Therefore, the brightness compensation determiner 16 according to an embodiment may determine whether to perform brightness compensation in consideration of characteristics of a certain data unit, such as a slice or a block of a current image.

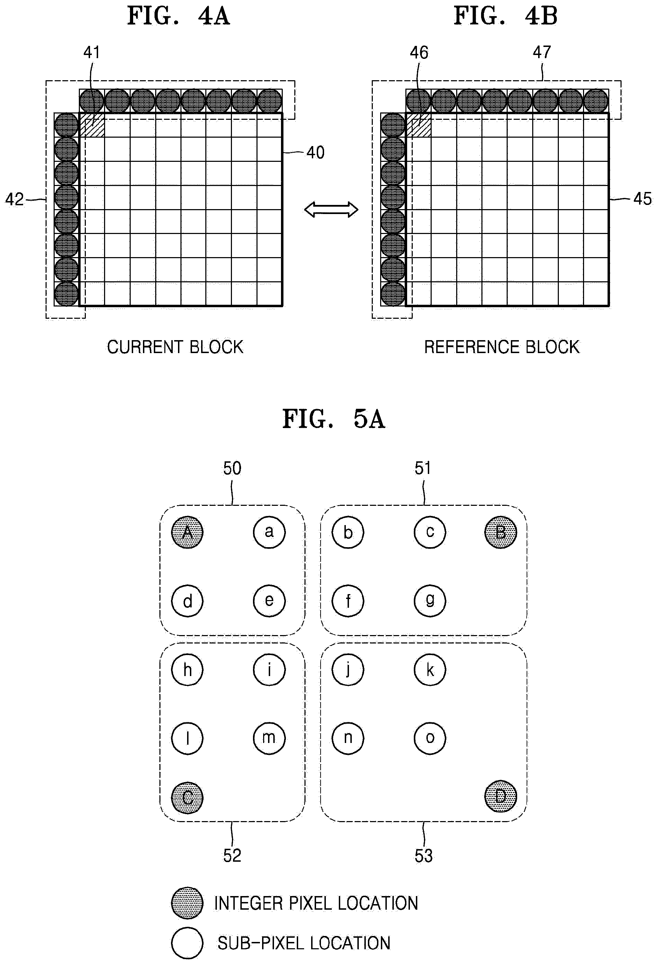

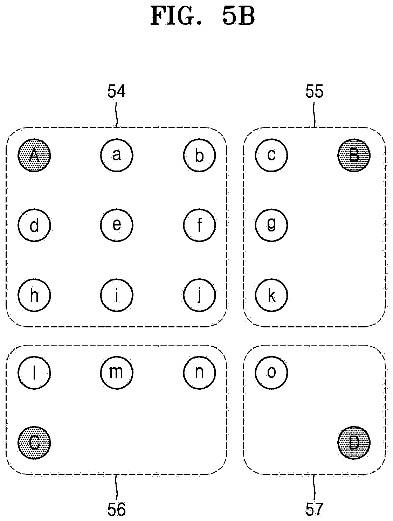

In an operation 13, the reference pixel determiner 17 may determine first layer reference pixels by using locations of the closest integer pixels to reference location of a first layer corresponding to locations of reference pixels for a second layer current block. Here, utilization of using locations of the closest integer pixels to reference location of a first layer will be described below in detail with reference to FIGS. 5A and 5B.

According to an embodiment, the reference pixel determiner 17 may determine locations of the closest integer pixels to reference location of a first layer reconstructed image corresponding to location of a second layer current block as location of a reference block and determine a block around the reference block as first layer reference pixels for inducing brightness compensation parameters.

In other words, reference pixels for a second layer current block may be pixels indicating location of the second layer current block. For example, pixels indicating location of the second layer current block may be the pixels at the upper-left corner of the second layer current block. Therefore, the reference pixel determiner 17 may determine the closest integer pixels to reference location of a first layer corresponding to locations of the pixels at the upper-left corner of the second layer current block as locations of pixels at the upper-left corner of a first layer reference block and determine pixels surrounding the determined first layer reference block as reference pixels. However, pixels indicating location of a current block are not limited to pixels at the upper-left corner and may be the center pixels of the current block or pixels at the other corners of the current block.

According to another embodiment, the reference pixel determiner 17 may determine the closest integer pixels to reference location of a first layer reconstructed image corresponding to locations of pixels surrounding a second layer current block as first layer reference pixels for inducing brightness compensation parameters.

In other words, reference pixels for a second layer current block may be pixels surrounding the second layer current block. Therefore, the reference pixel determiner 17 may determine the closest integer pixels to the reference location of the first layer as reference pixels.

According to another embodiment, the reference pixel determiner 17 may obtain at least one integer pixel close to reference location of a first layer and determine reference pixel values of the reference location of the first layer by using the obtained at least one integer pixel(s). For example, if reference location of a first layer is a sub-pixel location, a pixel value of the reference location may be induced by using an interpolation filter and the induced value may be used as reference pixel value of the reference location of the first layer.

In an operation 15, the brightness compensation mode determiner 18 may determine brightness compensation parameters regarding a second layer current block by using determined first layer reference pixels and pixels surrounding the second layer current block.

Therefore, the second layer encoder 14 may generate a second layer bitstream including inter-layer prediction information between a second layer block with brightness determined based on information regarding whether to perform brightness compensation and determined brightness compensation parameters and a first layer reference block.

The second layer encoder 14 may encode information determined by the brightness compensation determiner 16 indicating whether to perform brightness compensation with respect to a current block and a disparity vector used for determining brightness compensation parameters as a bitstream and transmit the bitstream. Furthermore, if the information indicating whether to perform brightness compensation and the disparity vector used for determining brightness compensation parameters may be determined based on existing encoded information, the second layer encoder 14 may not transmit the information indicating whether to perform brightness compensation and the disparity vector used for determining brightness compensation parameters.

When brightness of a second layer image is adjusted in consideration of a first layer image, an error between the second layer image and the first layer image is further reduced, and thus an encoding efficiency of inter-layer prediction may be improved. Furthermore, according to modes for encoding a block, brightness compensation may prevail in a particular encoding mode.

The interlayer video encoding apparatus 10 according to various embodiments of the present invention may include a central processor (not shown) that controls the first layer encoder 12, the second layer encoder 14, the brightness compensation determiner 16, the reference pixel determiner 17, and the brightness compensation mode determiner 18. Alternatively, each of the first layer encoder 12, the second layer encoder 14, the brightness compensation determiner 16, the reference pixel determiner 17, and the brightness compensation mode determiner 18 may be operated by its own processor (not shown), where the interlayer video encoding apparatus 10 may be operated as the processors (not shown) operates in conjunction with one another. Alternatively, the first layer encoder 12, the second layer encoder 14, the brightness compensation determiner 16, the reference pixel determiner 17, and the brightness compensation mode determiner 18 may be controlled by an external processor (not shown) outside the interlayer video encoding apparatus 10.

The interlayer video encoding apparatus 10 may include one or more data storage units (not shown) for storing data input to and output from the first layer encoder 12, the second layer encoder 14, the brightness compensation determiner 16, the reference pixel determiner 17, and the brightness compensation mode determiner 18. The interlayer video encoding apparatus 10 may include a memory controller (not shown) that manages data input/output of the data storage unit(s) (not shown).

In order to output a result of encoding a video, the interlayer video encoding apparatus 10 may operate in conjunction with an embedded video encoding processor or an external video encoding processor, thereby performing a video encoding operation including transformation. An embedded video encoding processor of the interlayer video encoding apparatus 10 may be an independent processor for embodying a video encoding operation. Furthermore, the interlayer video encoding apparatus 10, a central processing unit, or a graphic processing unit may include a video encoding processing module for embodying basic video encoding operations.

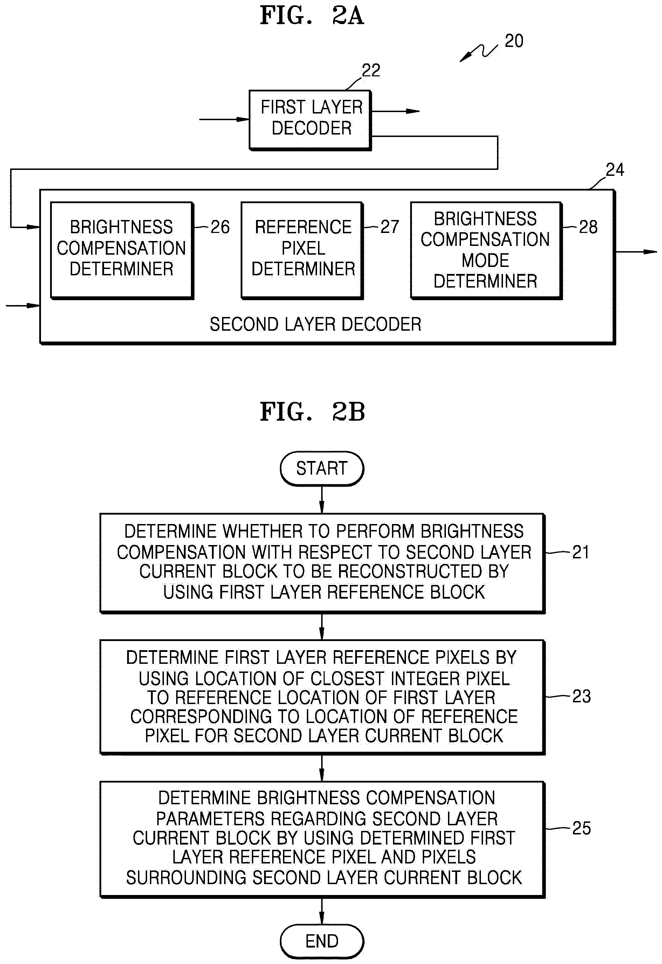

FIG. 2A is a block diagram of an interlayer video decoding apparatus 20 according to various embodiments of the present invention.

The interlayer video decoding apparatus 20 according to various embodiments of the present invention may include a first layer decoder 22 and a second layer decoder 24. The second layer decoder 24 may include a brightness compensation determiner 26, a brightness compensation determiner 26, and a brightness compensation mode determiner 28. According to another embodiment, the brightness compensation determiner 26, the reference pixel determiner 27, and the brightness compensation mode determiner 28 may be located outside the brightness compensation determiner 26.

The interlayer video decoding apparatus 20 may receive bitstreams by layers according to a scalable coding method. A number of layers of bitstreams received by the interlayer video decoding apparatus 20 is not limited. However, for convenience of explanation, an embodiment in which the first layer decoder 22 of the interlayer video decoding apparatus 20 receives and decodes a first layer stream and the second layer decoder 24 receives and decodes a second layer stream will be described below in detail.

For example, the interlayer video decoding apparatus 20 based on spatial scalability may receive streams in which image sequences of different resolutions are respectively encoded as different layers. A low-resolution image sequence may be reconstructed by decoding a first layer stream, whereas a high-resolution image sequence may be reconstructed by decoding a second layer stream.

In another example, a multi-viewpoint video may be decoded according to a scalable video coding method. If a stereoscopic video stream is received as a plurality of layers, left viewpoint images may be reconstructed by decoding a first layer stream. Right viewpoint images may be reconstructed by decoding the first layer stream and a second layer stream.

Alternatively, if a multi-viewpoint video stream is received as a plurality of layers, center viewpoint images may be reconstructed by decoding a first layer stream. Left viewpoint images may be reconstructed by decoding the first layer stream and a second layer stream. Right viewpoint images may be reconstructed by decoding the first layer stream and a third layer stream.

In another example, a scalable video coding method based on temporal scalability may be performed. Images of a basic frame rate may be reconstructed by decoding a first layer stream. Images of a high frame rate may be reconstructed by decoding the first layer stream and a second layer stream.

Furthermore, if there are three or more second layers, first layer images may be reconstructed from a first layer stream, and second layer images may be further reconstructed by decoding a second layer stream by referring to first layer reconstructed images. $K^{th}$ layer images may be further reconstructed by decoding a $K^{th}$ layer stream by referring to second layer reconstructed images.

The interlayer video decoding apparatus 20 may obtain encoded data of first layer images and second layer images from a first layer stream and a second layer stream and may further obtain a motion vector generated based on inter prediction and prediction information generated based on inter-layer prediction.

For example, the interlayer video decoding apparatus 20 may decode data inter predicted for respective layers and decode data inter-layer predicted between a plurality of layers. A motion compensation or reconstruction based on interlayer decoding may be performed based on a coding unit or a prediction unit.

Images may be reconstructed from each layer stream by performing motion compensation for a current image by referring to reconstructed images predicted via inter prediction of a same layer. Motion compensation refers to an operation for reconstructing a reconstructed image of a current image by synthesizing a reference image determined by using a motion vector of the current image with a residual of the current image.

Furthermore, the interlayer video decoding apparatus 20 may perform interlayer decoding by referring to first layer images in order to reconstruct a second layer image predicted via inter-layer prediction. Interlayer decoding refers to an operation for reconstructing a reconstructed image of a current image by synthesizing a reference image of another layer determined to predict the current image with a residual of the current image.

The interlayer video decoding apparatus 20 according to an embodiment may also perform interlayer decoding for reconstructing third layer images predicted by referring to second layer images. Detailed descriptions of an interlayer prediction structure will be given below with reference to FIG. 3.

However, the second layer decoder 24 according to various embodiments of the present invention may be able to decode a second layer stream without referring to a first layer image sequence. Therefore, it should not be limitedly understood that the second layer decoder 24 performs inter-layer prediction for decoding a second layer image sequence.

The interlayer video decoding apparatus 20 decodes blocks of each image of a video at each layer. From among coding units according to a tree structure, a block may be a LCU, a coding unit, a prediction unit, a transformation unit, etc.

The interlayer video decoding apparatus 20 may decode a first layer image by using coding symbols of the parsed first layer image. If the interlayer video decoding apparatus 20 receives streams encoded based on coding units according to a tree structure, the first layer decoder 22 may perform decoding with respect to each of LCUs of a first layer stream based on coding units according to a tree structure.

The first layer decoder 22 may perform entropy decoding with respect to each of LCUs and obtain encoding information and encoded data. The first layer decoder 22 may reconstruct a residual by performing dequantization and inverse transformation with respect to the encoded data obtained from a stream. The first layer decoder 22 according to another embodiment may directly receive a bitstream including quantized transformation coefficients. Residual of images may be reconstructed by performing dequantization and inverse transformation with respect to the quantized transformation coefficients.

The first layer decoder 22 may determine predicted images via motion compensation between same layer images and reconstruct first layer images by combining the predicted images with residual.

According to an inter-layer prediction structure, the second layer decoder 24 may generate second layer images by using samples of a first layer reconstructed image. The second layer decoder 24 may obtain a prediction error based on inter-layer prediction by decoding a second layer stream. The second layer decoder 24 may generate a second layer reconstructed image by combining a second layer prediction image with the prediction error.

The second layer decoder 24 may determine a second layer prediction image by using a first layer reconstructed image decoded by the first layer decoder 22. According to an inter-layer prediction structure, the second layer decoder 24 may determine a block of a first layer image to be referred by a block of a second layer image, such as a coding unit or a prediction unit. For example, a reconstructed block of a first layer image located in correspondence to location of a current block in a second layer image may be determined. The second layer decoder 24 may determine a second layer prediction block by using a first layer reconstructed block corresponding to a second layer block.

The second layer encoder 24 may use a second layer prediction block determined by using a first layer reconstructed block according to an inter-layer prediction structure as a reference image for inter-layer prediction of a second layer original block. In this case, the second layer decoder 24 may reconstruct a second layer block by synthesizing a sample value of the second layer prediction block determined by using a first layer reconstructed image with residual based on inter-layer prediction.

According to a spatial scalable video coding method, if the first layer decoder 22 reconstructed a first layer image of a different resolution from that of a second layer image, the second layer decoder 24 may interpolate a first layer reconstructed image for resizing the same to a same resolution as that of a second layer original image. The interpolated first layer reconstructed image may be determined as a second layer prediction image for inter-layer prediction.

Therefore, the first layer decoder 22 of the interlayer video decoding apparatus 20 may reconstruct a first layer image sequence by decoding a first layer stream, whereas the second layer decoder 24 may reconstruct a second layer image sequence by decoding a second layer stream.

Furthermore, in consideration of brightness inconsistency between viewpoints, the second layer decoder 24 of the interlayer video decoding apparatus 20 may compensate brightness differences between respective viewpoint videos and reconstruct the respective viewpoint videos. For example, a brightness difference between a first viewpoint image decoded by the first layer decoder 22 and a second viewpoint image decoded by the second layer decoder 24 may be obtained from a bitstream. Since the brightness difference of the second viewpoint image with respect to the first viewpoint image is obtained, it may be determined whether to perform a brightness compensation operation when the second layer decoder 24 decodes a second viewpoint video.

The interlayer video decoding apparatus 20 according to an embodiment may use brightness compensation parameters for compensating a brightness difference between a first layer block and a second layer block. Therefore, the interlayer video decoding apparatus 20 according to an embodiment may determine first layer reference pixels for inducing brightness compensation parameters by using the closest integer pixels to reference location of a first layer reconstructed image corresponding to locations of reference pixels for location of a second layer current block.

Hereinafter, detailed descriptions of operations of the interlayer video decoding apparatus 20 in consideration of brightness compensation will be given with reference to FIG. 2B.

FIG. 2B is a flowchart of an interlayer video decoding method according to various embodiments of the present invention.

In an operation 21, the brightness compensation determiner 26 may determine whether to perform brightness compensation with respect to a second layer current block to be reconstructed by using a first layer reference block.

Here, it may be determined whether to perform brightness compensation with respect to a second layer current block by using a syntax obtained form a received bitstream or other encoding information.

In an operation 23, based on whether to perform brightness compensation, the reference pixel determiner 27 may determine first layer reference pixels by using locations of the closest integer pixels to reference location of a first layer corresponding to locations of reference pixels for a second layer current block. Here, utilization of using locations of the closest integer pixels to reference location of a first layer will be described below in detail with reference to FIGS. 5A and 5B.

Furthermore, a disparity vector may be used to find reference location of the first layer corresponding to the second layer current block. Here, a disparity vector may be obtained from a received bitstream or may be induced from other encoding information.

According to an embodiment, the reference pixel determiner 27 may determine locations of the closest integer pixels to reference location of a first layer reconstructed image corresponding to location of a second layer current block as location of a reference block and determine a block around the reference block as first layer reference pixels for inducing brightness compensation parameters.

In other words, reference pixels for a second layer current block may be pixels indicating location of the second layer current block. For example, pixels indicating location of the second layer current block may be the pixels at the upper-left corner of the second layer current block. Therefore, the reference pixel determiner 27 may determine the closest integer pixels to reference location of a first layer corresponding to locations of the pixels at the upper-left corner of the second layer current block as locations of pixels at the upper-left corner of a first layer reference block and determine pixels surrounding the determined first layer reference block as reference pixels. However, pixels indicating location of a current block is not limited to pixels at the upper-left corner and may be the center pixels of the current block or one of pixels at the other corners of the current block.

According to another embodiment, the reference pixel determiner 27 may determine the closest integer pixels to reference location of a first layer reconstructed image corresponding to locations of pixels surrounding a second layer current block as first layer reference pixels for inducing brightness compensation parameters.

In other words, reference pixels for a second layer current block may be pixels surrounding the second layer current block. Therefore, the reference pixel determiner 27 may determine the closest integer pixels to the reference location of the first layer as reference pixels.

According to another embodiment, the reference pixel determiner 27 may obtain at least one integer pixel close to reference location of a first layer and determine reference pixel values of the reference location of the first layer by using the obtained at least one integer pixel(s). For example, if reference location of a first layer is a sub-pixel location, a pixel value of the reference location may be induced by using an interpolation filter and the induced value may be used as a reference pixel value of the reference location of the first layer.

In an operation 25, the brightness compensation mode determiner 28 may determine brightness compensation parameters regarding a second layer current block by using determined first layer reference pixels and pixels surrounding the second layer current block.

As described above, the second layer decoder 24 may receive information indicating whether to perform brightness compensation and determine whether to perform brightness compensation. When brightness compensation is performed, the second layer decoder 24 may determine brightness compensation parameters. Therefore, the second layer decoder 24 may reconstruct a second layer block with brightness compensated based on the information indicating whether to perform brightness compensation and determined brightness compensation parameters.

The interlayer video decoding apparatus 20 according to various embodiments of the present invention may include a central processor (not shown) that controls the first layer decoder 22, the second layer decoder 24, the brightness compensation determiner 26, the reference pixel determiner 27, and the brightness compensation mode determiner 28. Alternatively, each of the first layer decoder 22, the second layer decoder 24, the brightness compensation determiner 26, the reference pixel determiner 27, and the brightness compensation mode determiner 28 may be operated by its own processor (not shown), where the interlayer video decoding apparatus 20 may be operated as the processors (not shown) operates in conjunction with one another. Alternatively, the first layer decoder 22, the second layer decoder 24, the brightness compensation determiner 26, the reference pixel determiner 27, and the brightness compensation mode determiner 28 may be controlled by an external processor (not shown) outside the interlayer video decoding apparatus 20.

The interlayer video decoding apparatus 20 may include one or more data storage units (not shown) for storing data input to and output from the first layer decoder 22, the second layer decoder 24, the brightness compensation determiner 26, the reference pixel determiner 27, and the brightness compensation mode determiner 28. The interlayer video decoding apparatus 20 may include a memory controller (not shown) that manages data input/output of the data storage unit(s) (not shown).

In order to decode a video, the interlayer video decoding apparatus 20 may operate in conjunction with an embedded video decoding processor or an external video decoding processor, thereby performing a video decoding operation including inverse transformation. An embedded video decoding processor of the interlayer video decoding apparatus 20 may be an independent processor for embodying a video decoding operation. Furthermore, the interlayer video decoding apparatus 20, a central processing unit, or a graphic processing unit may include a video decoding processing module for embodying basic video decoding operations.

Referring to FIGS. 2A and 2B, the interlayer video decoding apparatus 20 compensates a brightness difference between images of different layers or a brightness difference between viewpoints with respect to a particular type block or slice while the interlayer video decoding apparatus 20 decodes a second layer image, brightness of a first layer reconstructed image and brightness of a second layer reconstructed image may become uniform. Referring to FIGS. 1A and 1B, the interlayer video encoding apparatus 10 performs brightness compensation between images of different layers with respect to a particular type block or slice, and thus residual between a prediction image and an original image may be reduced. As a result, encoding efficiency may be improved.

Furthermore, when a reference location for inducing brightness compensation parameters is at a sub-pixel location, the closest integer pixels thereto may be selected, thereby improving encoding efficiency.

FIG. 3 is a diagram showing an inter-layer prediction structure according to an embodiment.

The interlayer video encoding apparatus 10 according to an embodiment may prediction-encode basic-viewpoint images, left viewpoint images, and right viewpoint images according to a reproduction sequence 30 of a multi-viewpoint video prediction structure shown in FIG. 3.

According to the reproduction sequence 30 of a multi-viewpoint video prediction structure in the related art, images of a same viewpoint are arranged in a horizontal direction. Therefore, left viewpoint images marked as 'Left' are linearly arranged in a horizontal direction, and right viewpoint images marked as 'Right' are linearly arranged in a horizontal direction. Basic viewpoint images may be center viewpoint images compared to the left viewpoint/right viewpoint images.

Furthermore, images of a same POC sequence are arranged in a vertical direction. A POC sequence of images indicates a sequence for reproducing images constituting a video. 'POC X' marked in the multi-viewpoint video prediction structure 30 indicates a relative reproduction sequence regarding images located at a corresponding column, where priority of a reproduction sequence increases as a number X decreases and priority of a reproduction sequence decreases as a number X increases.

Therefore, according to the reproduction sequence 30 of a multi-viewpoint video prediction structure in the related art, left viewpoint images marked as 'Left' are arranged in a horizontal direction according to a POC sequence (reproduction sequence), basic viewpoint images marked as 'Center' are arranged in a horizontal direction according to a POC sequence (reproduction sequence), and right viewpoint images marked as 'Right' are arranged in a horizontal direction according to a POC sequence (reproduction sequence). Furthermore, left viewpoint images and right viewpoint images arranged on a same column as basic viewpoint images are images corresponding to different viewpoints, but are images of a same POC.

At each viewpoint, four successive images constitute a single group of pictures (GOP). Each GOP includes images between successive key pictures and one key picture.

A key picture is a random access point. During reproduction of a video, when a random reproduction location is selected from among images arranged according to a reproduction sequence (that is, a POC sequence), a key picture with the closest POC sequence to the reproduction location is reproduced. Basic viewpoint images include basic viewpoint key pictures 31, 32, 33, 34, and 35, left viewpoint images include left viewpoint key pictures 131, 132, 133, 134, and 135, and right viewpoint images include right viewpoint key pictures 231, 232, 233, 234, and 235.

Multi-viewpoint images may be reproduced and predicted (reconstructed) according to a GOP sequence. First, according to the reproduction sequence 30 of a multi-viewpoint video prediction structure, for each viewpoint, images included in a GOP 0 may be reproduced first, and then images included in a GOP 1 may be reproduced. In other words, images included in respective GOPs may be reproduced in the order of a GOP 0, a GOP 1, a GOP 2, and a GOP3. Furthermore, according to a coding sequence of a multi-viewpoint video prediction structure, for each viewpoint, images included in a GOP 0 may be predicted (reconstructed) first, and then images included in a GOP 1 may be predicted (reconstructed). In other words, images included in respective GOPs may be predicted (reconstructed) in the order of a GOP 0, a GOP 1, a GOP 2, and a GOP3.

According to the reproduction sequence 30 of a multi-viewpoint video prediction structure, both inter-viewpoint prediction (inter-layer prediction) and inter prediction are performed with respect to images. In a multi-viewpoint video prediction structure, an image at which an arrow begins is a reference image, whereas an image at which an arrow ends is an image predicted by using the reference image.

A result of predicting basic viewpoint images may be encoded and output in the form of a basic viewpoint image stream, whereas a result of predicting additional viewpoint images may be encoded and output in the form of a layer bitstream. Furthermore, a result of prediction-encoding left viewpoint images may be output as a first layer bitstream, whereas a result of prediction-encoding right viewpoint images may be output as a second layer bitstream.

Only inter prediction is performed with respect to basic viewpoint images. In other words, I-picture type key picture 31, 32, 33, 34, and 35 are predicted without referring to other images, but the other images, which are B-picture type images and b-picture type images, are predicted by referring to the other basic viewpoint images. B-picture type images are predicted by referring to an I-picture type key picture with a POC sequence of higher priority and a following I-picture type key picture. b-picture type images are predicted by referring to an I-picture type key picture with a POC sequence of higher priority and a following B-picture type image or a B-picture type key picture with a POC sequence of higher priority and a following I-picture type image.

Inter-viewpoint prediction (inter-layer prediction) referring to images of other viewpoints and inter prediction referring to images of a same viewpoint are performed with respect to left viewpoint images and right viewpoint images.

Inter-viewpoint prediction (inter-layer prediction) may be performed with respect to left viewpoint key pictures 131, 132, 133, 134, and 135 by referring to the basic viewpoint key pictures 31, 32, 33, 34, and 35 with same POC sequences, respectively. Inter-viewpoint prediction may be performed with respect to right viewpoint key pictures 231, 232, 233, 234, and 235 by referring to the basic viewpoint key pictures 31, 32, 33, 34, and 35 or the left viewpoint key pictures 131, 132, 133, 134, and 135 with same POC sequences, respectively. Furthermore, inter-viewpoint prediction (inter-layer prediction) referring to images of other viewpoints with same POCs may be performed with respect to images from among the left viewpoint images and the right viewpoint images other than the key pictures 131, 132, 133, 134, 135, 231, 232, 233, 234, and 235.

The images from among the left viewpoint images and the right viewpoint images other than the key pictures 131, 132, 133, 134, 135, 231, 232, 233, 234, and 235 are predicted by referring to images of a same viewpoint.

However, each of left viewpoint images and right viewpoint images may not be predicted by referring to a key picture of preceding reproduction sequence from among additional viewpoint images of a same viewpoint. In other words, for inter prediction of a current left viewpoint image, left viewpoint images other than a left viewpoint key picture of a prior reproduction sequence to a current left viewpoint image may be referred to. In the same regard, for inter prediction of a current right viewpoint image, right viewpoint images other than a right viewpoint key picture of a prior reproduction sequence to a current right viewpoint image may be referred to.

Furthermore, for inter prediction of a current left viewpoint image, left viewpoint images belonging to GOPs prior to a current GOP including the current left viewpoint image may not be referred to, and the inter prediction may be performed by referring to left viewpoint images that belong to the current GOP and will be reconstructed before the current left viewpoint image. The same applies to right viewpoint images.

The interlayer video decoding apparatus 20 according to an embodiment may reconstruct basic viewpoint images, left viewpoint images, and right viewpoint images according to the reproduction sequence 30 of a multi-viewpoint video prediction structure shown in FIG. 3.

Left viewpoint images may be reconstructed via inter-viewpoint disparity compensation referring to basic viewpoint images and inter-image motion compensation referring to left viewpoint images. Right viewpoint images may be reconstructed via inter-viewpoint disparity compensation referring to basic viewpoint images and inter-image motion compensation referring to right viewpoint images. For disparity compensation and motion compensation of left viewpoint images and right viewpoint images, it is necessary to reconstruct reference images first.

For motion compensation of left viewpoint images, left viewpoint images may be reconstructed via inter-image motion compensation referring to a reconstructed left viewpoint reference image. For motion compensation of right viewpoint images, right viewpoint images may be reconstructed via inter-image motion compensation referring to a reconstructed right viewpoint reference image.

Furthermore, for motion compensation of a current left viewpoint image, left viewpoint images belonging to GOPs prior to a current GOP including the current left viewpoint image may not be referred to, and the motion compensation may be performed by referring to left viewpoint images that belong to the current GOP and will be reconstructed before the current left viewpoint image. The same applies to right viewpoint images.

As described above, when a reference location for inducing brightness compensation parameters is at a sub-pixel location, the interlayer video encoding apparatus 10 and the interlayer video decoding apparatus 20 may select the closest integer pixels thereto, thereby improving encoding efficiency.

Furthermore, as described above, the interlayer video encoding apparatus 10 and the interlayer video decoding apparatus 20 may determine whether to perform brightness compensation according to image characteristics. For example, it may be determined whether to perform brightness compensation with respect to a block according to an encoding mode, a prediction direction, and a coding type regarding the block, which are determined via rate-distortion optimization.

Hereinafter, referring to FIGS. 4 to 7, methods of determining brightness compensation parameters according to various embodiments of the present invention will be suggested.

An embodiment for inducing brightness compensation parameters by using pixels surrounding a current block and pixels surrounding a reference block will be described with reference to FIG. 4, and an embodiment for determining reference pixels for inducing brightness compensation parameters will be described with reference to FIGS. 5A to 6B.

FIG. 4 is a diagram showing a method of determining brightness compensation parameters according to an embodiment.

The interlayer video decoding apparatus 20 according to an embodiment may obtain flag information regarding whether to perform brightness compensation with respect to each coding units and may determine brightness compensation parameters regarding respective color elements Y, U, and V in each prediction direction for each prediction unit of each coding unit. Here, the brightness compensation parameters may be determined based on pixels surrounding a current block and pixels surrounding a block on another layer corresponding to the current block. In other words, brightness compensation parameters may be determined by comparing pixels surrounding a reference block of a first layer to pixels surrounding a current block of a second layer. Here, the pixels surrounding the current block refers to pixels surrounding the current block that is reconstructed and may be used before reconstruction of the current block. Therefore, if pixels surrounding a current block may not be used, no brightness compensation parameter may be induced.

Referring to FIG. 4, brightness compensation parameters may be induced by using pixels 42 surrounding a second layer current block 40 and reference pixels 47 around a first layer reference block 45 corresponding to the second layer current block 40. For example, an average brightness difference between the surrounding pixels 42 and the reference pixels 47 may be determine as an offset, and thus brightness compensation may be performed to the second layer current block 40 according to the determined offset. In another example, a scaling factor and an offset may be induced via linear regression analysis regarding the surrounding pixels 42 and the reference pixels 47, and then brightness compensation may be performed based on the obtained values.

Incidentally, in order to determine brightness compensation parameters, it is necessary to find another layer reference block 45 corresponding to the second layer current block 40, where a disparity vector may be utilized. Here, the disparity vector refers to a vector indicating a difference between location of a second layer current block and a first layer reference block.

However, since a disparity vector may exhibit a fractional unit precision, such as quarter-pel or half-pal, location indicated by a disparity vector at a location of a reference pixel 41 for the second layer current block 40 may be location of a sub-pixel. However, to reduce complexity of brightness compensation, pixels around the second layer current block 40 are compared to pixels around the first layer reference block 45 as integer pixel, and thus location of the reference block 45 should be determined as location of an integer pixel.

Therefore, the interlayer video encoding apparatus 10 or the interlayer video decoding apparatus 20 according to an embodiment may determine the closest integer pixels to reference location of another layer image indicated by a disparity vector at the reference pixel 41 for the current block 40 as reference pixels 46 of the first layer reference block 45.

For example, FIGS. 5A and 5B show examples of determining close integer pixels indicated by disparity vectors, according to embodiments of the present invention.

In FIGS. 5A and 5B, A, B, C, and D denote locations of integer pixels, and small letters a to o denote sub-pixel locations, respectively.

Referring to FIG. 5A, according to an embodiment, if a disparity vector indicates sub-pixel locations a, d, and e in an upper-left area 50, it may be determined that the sub-pixel locations a, d, and e correspond to an integer pixel location A. In the same regard, sub-pixel locations b, c, f, and g in an upper-right area 51 may be determined as an integer pixel location B, sub-pixel locations I, m, and n in a lower-left area 52 may be determined as an integer pixel location C, and sub-pixel locations j, k, n, and o in a lower-right area 53 may be determined as an integer pixel location D. Of course, if a disparity vector indicates an integer pixel location, the corresponding integer pixel location may be determined as a location corresponding to the disparity vector.

In another example, referring to FIG. 5B, if a disparity vector indicates sub-pixel locations a, b, d, e, f, h, i, and j in an upper-left area 54, it may be determined that the sub-pixel locations a, b, d, e, f, h, i, and j correspond to the integer pixel location A. In the same regard, sub-pixel locations c, g, and k in an upper-right area 55 may be determined as the integer pixel location B, sub-pixel locations I, m, and n in a lower-left area 56 may be determined as the integer pixel location C, and a sub-pixel location o in a lower-right area 57 may be determined as the integer pixel location D. In other words, integer pixel locations that are matched when a disparity vector indicates certain sub-pixels are not limited to those shown in FIGS. 5A and 5B, and various modifications may be made therein.

Incidentally, as described above with reference to FIG. 5A, a method of matching locations indicated by a disparity vector at location of the reference pixel 41 for a current block to integer pixel locations may be expressed as pseudo-codes shown below. In the pseudo-codes shown below, mvLX[0] and mvLX[1] denote x component and y component of a disparity vector, xC and yC denote location coordinates of a current block, where cldx may denote Y component or depth map (when value of cldx is 0), may denote U component (when value of cldx is 1), or may denote V component (when value of cldx is 2). Furthermore, since size of a luma block is different from that of a chroma block, a distance between integer pixels in the luma block is different from that in the chroma block. Therefore, by using a conditional statement 'cldx? 4: 2', methods of matching sub-pixels to integer pixels when a disparity vector indicates a sub-pixel may differ based on whether a block is a luma block and a chroma block.

$$xRLX = xC + (( mvLX[ 0 ] + ( cIdx ? 4 : 2 )) >> (2 + ( cIdx ? 1 : 0)))$$

$$yRLX = yC + (( mvLX[ 1 ] + ( cIdx ? 4 : 2 )) >> (2 + ( cIdx ? 1 : 0)))$$

Therefore, a location (xRLX, yRLX) of a reference block corresponding to location (xC, yC) of a current block may be obtained via a particular shift calculation shown in the pseudo-codes. Here, the location (xC, yC) of the current block and the location (xRLX, yRLX) of the reference block may be coordinates of pixels at the upper-left corner of each block. However, the present invention is not limited thereto, and the location (xC, yC) of the current block and the location (xRLX, yRLX) of the reference block may be coordinates of pixels at the center of each block.

Incidentally, the above pseudo-codes may be modified as shown below.

$$xRLX = xC + ( (mvLX[ 0 ] + 2 + (cIdx ? 2 : 0)) >> (2 + (cIdx ? 1 : 0)))$$

$$yRLX = yC + ( (mvLX[ 1 ] + 2 + (cIdx ? 2 : 0)) >> (2 + (cIdx ? 1 : 0)))$$

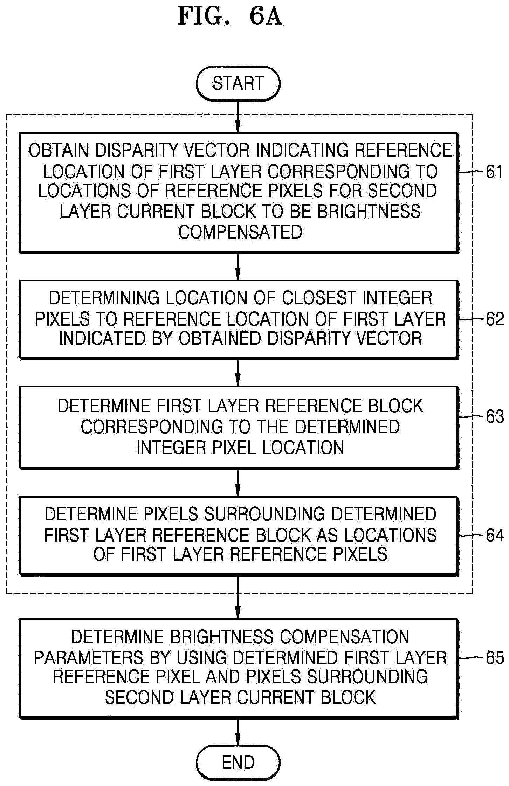

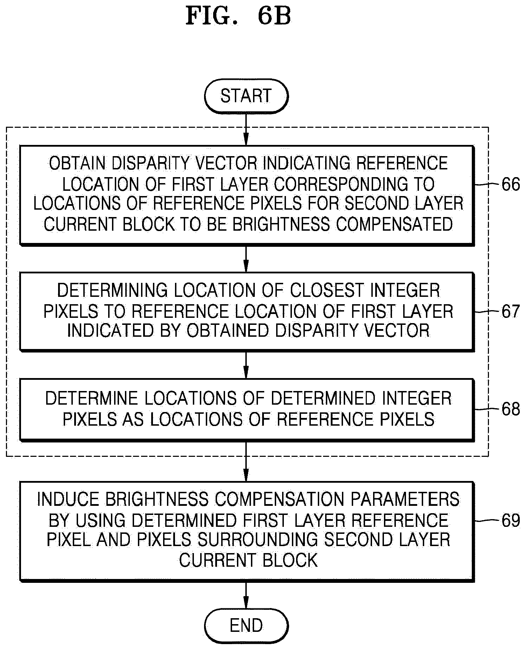

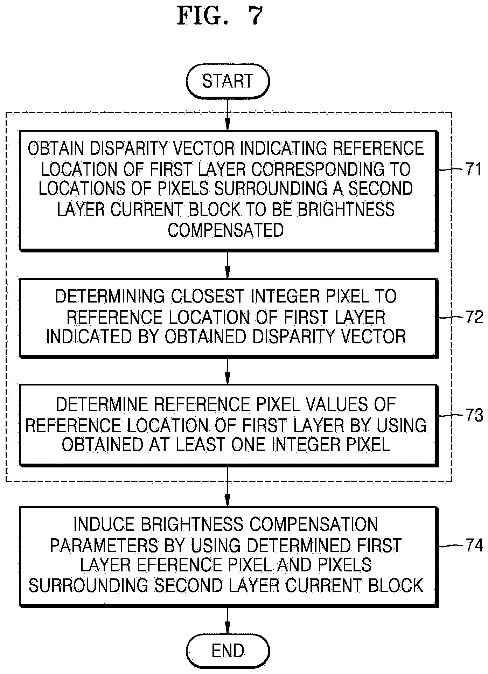

Hereinafter, a method of obtaining the reference pixels 47 of the other layer current block 40 corresponding to the pixels 42 surrounding the current block 40 in case where integer pixels corresponding to a disparity vector is determine according to the above-stated method will be described below with reference to FIGS. 6A and 6B. Furthermore, referring to FIG. 7, a method of obtaining the reference pixels 47 of the other layer reference block 45 corresponding to the pixels 42 surrounding the current block 40 by using integer pixels closed to a reference location indicated by a disparity vector will be described below.

FIG. 6A is a flowchart of a method of determining reference pixels for inducing brightness compensation parameters according to an embodiment.

Referring to FIG. 6A, the interlayer video decoding apparatus 20 according to an embodiment may determine locations of the closest integer pixels to reference location of a first layer reconstructed image corresponding to location of a second layer current block as location of a reference block and determine blocks surrounding the reference blocks as first layer reference pixels for inducing brightness compensation parameters.

In an operation 61, the reference pixel determiner 27 may obtain a disparity vector indicating reference location of a first layer corresponding to location of a second layer current block to which brightness compensation will be performed.

In an operation 62, the reference pixel determiner 27 may determine location of the closest integer pixel to reference location of a first layer indicated by the obtained disparity vector.

In an operation 63, the reference pixel determiner 27 may determine a first layer reference block corresponding to location of the determined integer pixel.

In an operation S64, the reference pixel determiner 27 may determine pixels surrounding the determined first layer reference block as first layer reference pixels.

Therefore, in an operation 65, the brightness compensation mode determiner 28 may determine brightness compensation parameters by using the determined first layer reference pixels and pixels surrounding the second layer current block.

FIG. 6B is a flowchart of a method of determining reference pixels for inducing brightness compensation parameters, according to another embodiment.

Referring to FIG. 6B, the interlayer video decoding apparatus 20 according to another embodiment may determine the closest integer pixels to reference location of a first layer reconstructed image corresponding to locations of pixels surrounding a second layer current block as locations of first layer reference pixels for inducing brightness compensation parameters.

In an operation 66, the reference pixel determiner 27 may obtain a disparity vector indicating reference location of a first layer corresponding to locations of pixels surrounding the second layer current block to which brightness compensation will be performed.

In an operation 67, the reference pixel determiner 27 may determine locations of the closest integer pixels to reference location of a first layer indicated by the obtained disparity vector.

In an operation 68, the reference pixel determiner 27 may determine the determined locations of integer pixels as locations of reference pixels.

Therefore, in an operation 69, the brightness compensation mode determiner 28 may induce brightness compensation parameters by using the determined first layer reference pixels and pixels surrounding the second layer current block.

FIG. 7 is a flowchart of a method of determining reference pixels for inducing brightness compensation parameters, according to another embodiment.

Referring to FIG. 7, the interlayer video decoding apparatus 20 according to another embodiment may obtain at least one integer pixel close to reference location of a first layer and may determine reference pixel values of the reference location of the first layer by using the obtained at least one integer pixel(s). For example, if reference location of a first layer is a sub-pixel location, the interlayer video decoding apparatus 20 may interpolate a reference pixel value by using integer pixels close to the sub-pixel.

In an operation 71, the reference pixel determiner 27 may obtain a disparity vector indicating reference location of a first layer corresponding to locations of pixels surrounding the second layer current block to which brightness compensation will be performed.

In an operation 72, the reference pixel determiner 27 may obtain integer pixels close to reference location of a first layer indicated by the disparity vector.

in an operation 73, the reference pixel determiner 27 may determine reference pixel values corresponding to reference location of a first layer by using the obtained at least one integer pixel. For example, the reference pixel determiner 27 may if reference location of a first layer is a sub-pixel location, the reference pixel determiner 27 may induce a pixel value of the reference location by using an interpolation filter and use the induced value as reference pixel value of the reference location of the first layer.

Therefore, in an operation 74, the brightness compensation mode determiner 28 may induce brightness compensation parameters by using determined first layer reference pixels and pixels surrounding the second layer current block.

Incidentally, although the operations performed at the interlayer video decoding apparatus 20 are described above with reference to FIGS. 6A to 7, one of ordinary skill in the art will understand that the above-stated operations may also be applied to the interlayer video encoding apparatus 10.

As described above with reference to FIGS. 1A to 7, the interlayer video encoding apparatus 10 and the interlayer video decoding apparatus 20 that determine whether to perform brightness compensation with respect to blocks based on image characteristics have been suggested. If brightness compensation is performed with respect to all blocks, calculation load may be increased. Therefore, it is determined whether to perform brightness compensation with respect to only blocks satisfying a certain condition. It is not determine whether to perform brightness compensation with respect to blocks not satisfying the certain condition and brightness compensation is not performed to the blocks.

Therefore, it may be determined whether to perform brightness compensation with respect to blocks encoded in a pre-set encoding mode. Furthermore, brightness compensation information indicating whether to perform brightness compensation with respect to blocks encoded in the corresponding encoding mode may be included in a transmitted stream or may be obtained from a received stream.

Therefore, according to the interlayer video encoding apparatus 10 and the interlayer video decoding apparatus 20 according to various embodiments of the present invention, since it is determined whether to perform brightness compensation with respect to only blocks that need brightness compensation more than the other blocks and brightness compensation is not performed to the other blocks, increase of a calculation load based on brightness compensation may be reduced and encoding efficiency may be improved based on brightness compensation.

Furthermore, according to the interlayer video encoding apparatus 10 and the interlayer video decoding apparatus 20 according to various embodiments of the present invention, when reference location of another layer for inducing brightness compensation parameters is at a sub-pixel location, the closest integer pixels thereto may be used, thereby improving encoding efficiency.

As described above, in the interlayer video encoding apparatus 10 and the interlayer video decoding apparatus 20 according to an embodiment, blocks divided from video data are divided into coding units according to a tree structure and coding units, prediction units, and transformation units may be used for inter-layer prediction or inter prediction regarding the coding units. Hereinafter, referring to FIGS. 8 to 20, a video encoding method, an video encoding apparatus, a video decoding method, and a video decoding apparatus based on coding units according to a tree structure and transformation units will be disclosed.

Technically, during encoding/decoding operations for a multilayer video, encoding/decoding operations for first layer images and encoding/decoding operations for second layer images are performed separately from each other. In other words, if inter-layer prediction occurs during a multilayer video, results of encoding/decoding single layer videos may be mutually referred to, but separate encoding/decoding operations are needed for each single layer video.

Therefore, for convenience of explanation, since a video encoding operation and a video decoding operation based on coding units according to a tree structure as described below with reference to FIGS. 8 to 20 are a video encoding operation and a video decoding operation regarding a single layer video, detailed descriptions of inter prediction and motion compensation will be given below. However, as described above with reference to FIGS. 1A to 7B, inter-layer prediction and compensation are performed between basic viewpoint images and second layer images for encoding/decoding a video stream.

Therefore, for the encoding unit 12 of the interlayer video encoding apparatus 10 according to an embodiment to encode a multilayer video based on coding units according to a tree structure, in order to perform video encoding with respect to each single layer video, the encoding unit 12 may include a same number of video encoding apparatuses 100 of FIG. 8 as a number of layers of the multilayer video and control the video encoding apparatuses 100 to encode single layer videos allocated thereto, respectively. Furthermore, the interlayer video encoding apparatus 10 may perform inter-viewpoint prediction by using results of encoding independent viewpoints by the respective video encoding apparatuses 100. Therefore, the first layer encoder 12 of the interlayer video encoding apparatus 10 may generate a basic viewpoint video stream and a second layer video stream including results of encoding respective layers.

Similarly, for the decoding unit 26 of the interlayer video decoding apparatus 10 according to an embodiment to decode a multilayer video based on coding units according to a tree structure, in order to decode a received first layer video stream and a received second layer video stream by layer, the decoding unit 26 may include a same number of video decoding apparatuses 200 of FIG. 9 as a number of layers of the multilayer video and control the video decoding apparatuses 200 to decode single layer videos allocated thereto, respectively. Furthermore, the interlayer video decoding apparatus 20 may perform interlayer compensation by using results of decoding independent single layers by the video decoding apparatus 200. Therefore, the decoding unit 26 of the interlayer video decoding apparatus 20 may generate first layer images and second layer images that are reconstructed by layer.

FIG. 8 is a block diagram of a video encoding apparatus 100 based on coding units according to a tree structure, according to one or more embodiments.

The video encoding apparatus 100 involving video prediction based on coding units according to a tree structure includes a coding unit determiner 120 and an outputter 130.

The coding unit determiner 120 may split a current picture based on a LCU that is a coding unit having a maximum size for a current picture of an image. If the current picture is larger than the LCU, image data of the current picture may be split into the at least one LCU. The LCU according to one or more embodiments may be a data unit having a size of 32x32, 64x64, 128×128, 256×256, etc., wherein a shape of the data unit is a square having a width and length in squares of 2.

A coding unit according to one or more embodiments may be characterized by a maximum size and a depth. The depth denotes the number of times the coding unit is spatially split from the LCU, and as the depth deepens, deeper coding units according to depths may be split from the LCU to a smallest coding unit (SCU). A depth of the LCU is an uppermost depth and a depth of the SCU is a lowermost depth. Since a size of a coding unit corresponding to each depth decreases as the depth of the LCU deepens, a coding unit corresponding to an upper depth may include a plurality of coding units corresponding to lower depths.

As described above, the image data of the current picture is split into the LCUs according to a maximum size of the coding unit, and each of the LCUs may include deeper coding units that are split according to depths. Since the LCU according to one or more embodiments is split according to depths, the image data of the space domain included in the LCU may be hierarchically classified according to depths.

A maximum depth and a maximum size of a coding unit, which limit the total number of times a height and a width of the LCU are hierarchically split, may be predetermined.

The coding unit determiner 120 encodes at least one split region obtained by splitting a region of the LCU according to depths, and determines a depth to output a finally encoded image data according to the at least one split region. In other words, the coding unit determiner 120 determines a final depth by encoding the image data in the deeper coding units according to depths, according to the LCU of the current picture, and selecting a depth having the least encoding error. The determined depth and the encoded image data according to the determined final depth are output to the outputter 130.

The image data in the LCU is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one final depth may be selected for each LCU.

The size of the LCU is split as a coding unit is hierarchically split according to depths, and as the number of coding units increases. Also, even if coding units correspond to the same depth in one LCU, it is determined whether to split each of the coding units corresponding to the same depth to a lower depth by measuring an encoding error of the image data of the each coding unit, separately. Accordingly, even when image data is included in one LCU, the encoding errors may differ according to regions in the one LCU, and thus the final depths may differ according to regions in the image data. Thus, one or more final depths may be determined in one LCU, and the image data of the LCU may be divided according to coding units of at least one final depth.

Accordingly, the coding unit determiner 120 may determine coding units having a tree structure included in the LCU. The 'coding units having a tree structure' according to one or more embodiments include coding units corresponding to a depth determined to be the final depth, from among all deeper coding units included in the LCU. A coding unit of a final depth may be hierarchically determined according to depths in the same region of the LCU, and may be independently determined in different regions. Similarly, a final depth in a current region may be independently determined from a depth in another region.

A maximum depth according to one or more embodiments is an index related to the number of splitting times from a LCU to an SCU. A first maximum depth according to one or more embodiments may denote the total number of splitting times from the LCU to the SCU. A second maximum depth according to one or more embodiments may denote the total number of depth levels from the LCU to the SCU. For example, when a depth of the LCU is 0, a depth of a coding unit, in which the LCU is split once, may be set to 1, and a depth of a coding unit, in which the LCU is split twice, may be set to 2. Here, if the SCU is a coding unit in which the LCU is split four times, 5 depth levels of depths 0, 1, 2, 3, and 4 exist, and thus the first maximum depth may be set to 4, and the second maximum depth may be set to 5.

Prediction encoding and transformation may be performed according to the LCU. The prediction encoding and the transformation are also performed based on the deeper coding units according to a depth equal to or depths less than the maximum depth, according to the LCU.

Since the number of deeper coding units increases whenever the LCU is split according to depths, encoding, including the prediction encoding and the transformation, is performed on all of the deeper coding units generated as the depth deepens. For convenience of description, the prediction encoding and the transformation will now be described based on a coding unit of a current depth, in a LCU.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the LCU, the prediction encoding may be performed based on a coding unit corresponding to a depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, $2N \times N$, $N \times 2N$, or $N \times N$. Examples of a partition mode include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in the similar manner as the coding unit according to the tree structure. Thus, residues in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Splitting information corresponding to a depth requires not only information about the depth, but also about information related to prediction encoding and transformation. Accordingly, the coding unit determiner 120 not only determines a depth having a least encoding error, but also determines a partition mode in a prediction unit, a prediction mode according to prediction units, and a size of a transformation unit for transformation.

Coding units according to a tree structure in a LCU and methods of determining a prediction unit/partition, and a transformation unit, according to one or more embodiments, will be described in detail below with reference to FIGS. 9 through 19.

The coding unit determiner 120 may measure an encoding error of deeper coding units according to depths by using Rate-Distortion Optimization based on Lagrangian multipliers.

The outputter 130 outputs the image data of the LCU, which is encoded based on the at least one depth determined by the coding unit determiner 120, and splitting information according to the depth, in bitstreams.

The encoded image data may be obtained by encoding residues of an image.

The splitting information according to depth may include information about the depth, about the partition mode in the prediction unit, the prediction mode, and the split of the transformation unit.

The information about the final depth may be defined by using splitting information according to depths, which indicates whether encoding is performed on coding units of a lower depth instead of a current depth. If the current depth of the current coding unit is the depth, image data in the current coding unit is encoded and output, and thus the splitting information may be defined not to split the current coding unit to a lower depth. Alternatively, if the current depth of the current coding unit is not the depth, the encoding is performed on the coding unit of the lower depth, and thus the splitting information may be defined to split the current coding unit to obtain the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one LCU, and at least one splitting information is determined for a coding unit of a depth, at least one splitting information may be determined for one LCU. Also, a depth of the image data of the LCU may be different according to locations since the image data is hierarchically split according to depths, and thus splitting information may be set for the image data.

Accordingly, the outputter 130 may assign corresponding splitting information to at least one of the coding unit, the prediction unit, and a minimum unit included in the LCU.

The minimum unit according to one or more embodiments is a square data unit obtained by splitting the SCU constituting the lowermost depth by 4. Alternatively, the minimum unit according to an embodiment may be a maximum square data unit that may be included in all of the coding units, prediction units, partition units, and transformation units included in the LCU.

For example, the encoding information output by the outputter 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The outputter 130 may encode and output related reference information, prediction information, and slice type information.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each LCU, based on the size of the LCU and the maximum depth determined considering characteristics of the current picture. Also, since encoding may be performed on each LCU by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

In order to encode single layer images of each layer of a multilayer video, the interlayer video encoding apparatus 10 described above with reference to FIG. 1A may include a same number of video encoding apparatuses 100 as a number of the layers. For example, the first layer encoder 12 may include one video encoding apparatus 100, whereas the second layer encoder 14 may include a number of the video encoding apparatuses 100 same as a number of second layers.

In case where the video encoding apparatus 100 encodes first layer images, the coding unit determiner 120 may determine a prediction unit for inter-image prediction for each of coding units according to a tree structure in each LCU and perform inter-image prediction for each prediction unit.

In case where the video encoding apparatus 100 encodes second layer images, the coding unit determiner 120 may determine coding units according to a tree structure and prediction units for each LCU and perform inter prediction for each prediction unit.

In order to compensate a brightness difference between a first layer image and a second layer image, the video encoding apparatus 100 may encode the brightness difference. However, it may be determined whether to perform brightness compensation according to a coding mode of a coding unit. For example, brightness compensation may be performed with respect to only prediction units of 2Nx2N.

FIG. 9 is a block diagram of a video decoding apparatus 200 based on coding units having a tree structure, according to one or more embodiments.

The video decoding apparatus 200 that involves video prediction based on coding units having a tree structure includes a receiver 210, an image data and encoding information extractor 220, and an image data decoder 230.

Definitions of various terms, such as a coding unit, a depth, a prediction unit, a transformation unit, and splitting information, for decoding operations of the video decoding apparatus 200 are identical to those described with reference to FIG. 8 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each LCU, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts final splitting information and encoding information for the coding units having a tree structure according to each LCU, from the parsed bitstream. The extracted final splitting information and encoding information are output to the image data decoder 230. In other words, the image data in a bit stream is split into the LCU so that the image data decoder 230 decodes the image data for each LCU.

The final splitting information and encoding information according to the LCU may be set for at least one piece of splitting information corresponding to the depth, and encoding information according to the depth may include information about a partition mode of a corresponding coding unit corresponding to the depth, information about a prediction mode, and splitting information of a transformation unit. Also, splitting information according to depths may be extracted as the information about a final depth.

The splitting information and the encoding information according to each LCU extracted by the image data and encoding information extractor 220 is splitting information and encoding information determined to generate a minimum encoding error when an encoder, such as the video encoding apparatus 100, repeatedly performs encoding for each deeper coding unit according to depths according to each LCU. Accordingly, the video decoding apparatus 200 may reconstruct an image by decoding the image data according to a depth and an encoding mode that generates the minimum encoding error.

Since the splitting information and the encoding information may be assigned to a predetermined data unit from among a corresponding coding unit, a prediction unit, and a minimum unit, the image data and encoding information extractor 220 may extract the splitting information and the encoding information according to the predetermined data units. If splitting information and encoding information of a corresponding LCU are recorded according to predetermined data units, the predetermined data units to which the same splitting information and encoding information are assigned may be inferred to be the data units included in the same LCU.

The image data decoder 230 reconstructs the current picture by decoding the image data in each LCU based on the splitting information and the encoding information according to the LCUs. In other words, the image data decoder 230 may decode the encoded image data based on the extracted information about the partition mode, the prediction mode, and the transformation unit for each coding unit from among the coding units having the tree structure included in each LCU. A decoding process may include a prediction including intra prediction and motion compensation, and an inverse transformation.

The image data decoder 230 may perform intra prediction or motion compensation according to a partition and a prediction mode of each coding unit, based on the information about the partition mode and the prediction mode of the prediction unit of the coding unit according to depths.

In addition, the image data decoder 230 may read information about a transformation unit according to a tree structure for each coding unit so as to perform inverse transformation based on transformation units for each coding unit, for inverse transformation for each LCU. Via the inverse transformation, a pixel value of the space domain of the coding unit may be reconstructed.

The image data decoder 230 may determine a final depth of a current LCU by using splitting information according to depths. If the splitting information indicates that image data is no longer split in the current depth, the current depth is the final depth. Accordingly, the image data decoder 230 may decode encoded data in the current LCU by using the information about the partition mode of the prediction unit, the information about the prediction mode, and the splitting information of the transformation unit for each coding unit corresponding to the depth.

In other words, data units containing the encoding information including the same splitting information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit. In order to restore first layer images and second layer images by decoding received first layer image stream and a second layer image stream, the interlayer video decoding apparatus 20 described above with reference to FIG. 2A may include a same number of video decoding apparatuses 200 as a number of viewpoints.

If a first layer image stream is received, the video data decoder 230 of the video decoding apparatus 200 may split samples of first layer images extracted by the extractor 220 from the first layer image stream into coding units according to a tree structure of a LCU. The video data decoder 230 may restore first layer images by performing motion compensation for each prediction unit for inter-image prediction in each of coding units according to a tree structure of the samples of the first layer images.

If a second layer image stream is received, the video data decoder 230 of the video decoding apparatus 200 may split samples of second layer images extracted by the extractor 220 from the second layer image stream into coding units according to a tree structure of a LCU. The video data decoder 230 may restore second layer images by performing motion compensation for each prediction unit for inter-image prediction in each of coding units according to a tree structure of the samples of the second layer images.

The video data and encoding information extractor 220 may obtain information regarding brightness compensation from bitstreams for compensating a brightness difference between a first layer image and a second layer image. For example, brightness compensation may be performed to only prediction units of 2Nx2N.

In other words, the video decoding apparatus 200 may recursively perform encoding with respect to each LCU during an encoding operation, obtain information regarding a coding unit with the least encoding error, and use the information for decoding a current picture. In other words, encoded image data of coding units according to a tree structure determined as optimal coding units in each LCU may be decoded.

Therefore, even a high resolution image or an image with an excessive amount of data may be restored by efficiently decoding image data according to size of a coding unit and a coding mode adaptively determined according to image characteristics, by using optimal splitting information transmitted from an encoding end.

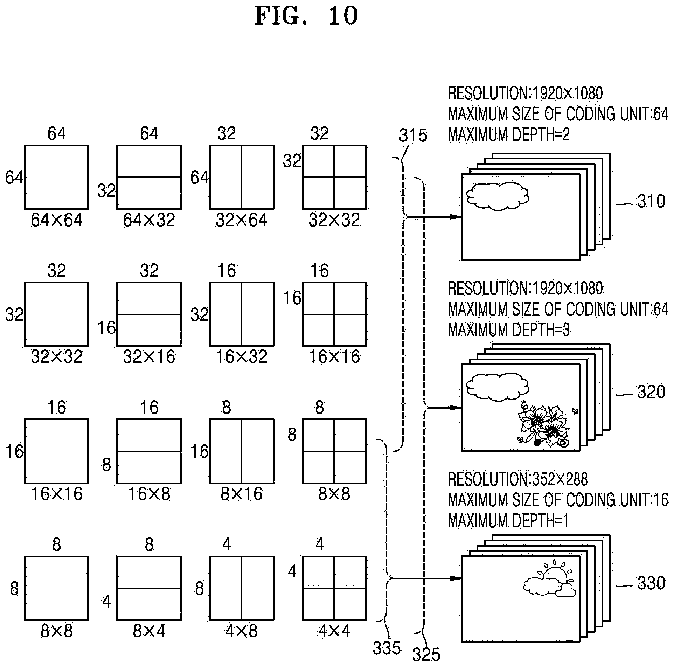

FIG. 10 is a diagram for describing a concept of coding units according to one or more embodiments.

A size of a coding unit may be expressed by width × height, and may be 64×64, 32×32, 16×16, and 8×8. A coding unit of 64×64 may be split into partitions of 64×64, 64×32, 32×64, or 32×32, and a coding unit of 32x32 may be split into partitions of 32×32, 32×16, 16×32, or 16×16, a coding unit of 16×16 may be split into partitions of 16×16, 16×8, 8×16, or 8×8, and a coding unit of 8x8 may be split into partitions of 8×8, 8×4, 4×8, or 4×4.

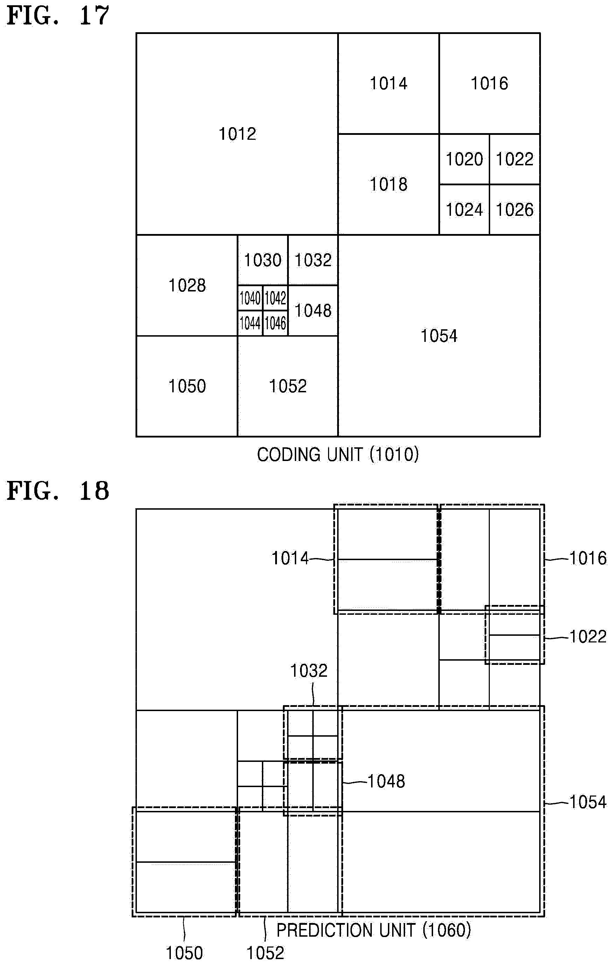

In video data 310, a resolution is 1920×1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 17 denotes a total number of splits from a LCU to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a LCU having a long axis size of 64, and coding units having long axis sizes of 32 and 16 since depths are deepened to two layers by splitting the LCU twice. Since the maximum depth of the video data 330 is 1, coding units 335 of the video data 330 may include a LCU having a long axis size of 16, and coding units having a long axis size of 8 since depths are deepened to one layer by splitting the LCU once.

Since the maximum depth of the video data 320 is 3, coding units 325 of the video data 320 may include a LCU having a long axis size of 64, and coding units having long axis sizes of 32, 16, and 8 since the depths are deepened to 3 layers by splitting the LCU three times. As a depth deepens, detailed information may be precisely expressed.

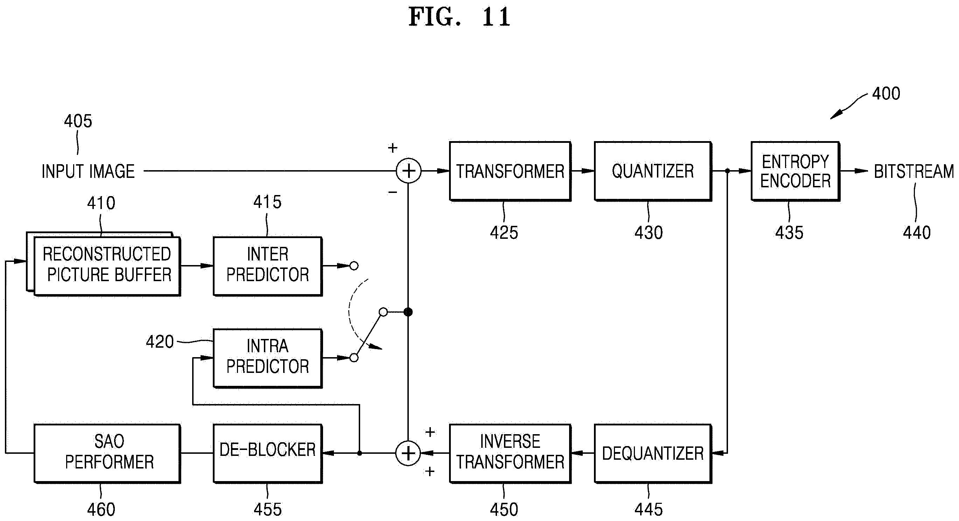

FIG. 11 is a block diagram of an image encoder 400 based on coding units, according to one or more embodiments.

The image encoder 400 performs operations necessary for encoding image data in the coding unit determiner 120 of the video encoding apparatus 100. In other words, an intra predictor 420 performs intra prediction on coding units in an intra mode according to prediction units, from among a current frame 405, and an inter predictor 415 performs inter prediction on coding units in an inter mode by using a current image 405 and a reference image obtained from a reconstructed picture buffer 410 according to prediction units. The current image 405 may be split into LCUs and then the LCUs may be sequentially encoded. In this regard, the LCUs that are to be split into coding units having a tree structure may be encoded.

Residue data is generated by removing prediction data regarding coding units of each mode that is output from the intra predictor 420 or the inter predictor 415 from data regarding encoded coding units of the current image 405, and is output as a quantized transformation coefficient according to transformation units through a transformer 425 and a quantizer 430. The quantized transformation coefficient is reconstructed as the residue data in a space domain through a dequantizer 445 and an inverse transformer 450. The reconstructed residue data in the space domain is added to prediction data for coding units of each mode that is output from the intra predictor 420 or the inter predictor and thus is reconstructed as data in a space domain for coding units of the current image 405. The reconstructed data in the space domain is generated as reconstructed images through a de-blocker 455 and an SAO performer 460. The reconstructed images are stored in the reconstructed picture buffer 410. The reconstructed images stored in the reconstructed picture buffer 410 may be used as reference images for inter prediction of another image. The transformation coefficient quantized by the transformer 425 and the quantizer 430 may be output as a bitstream 440 through an entropy encoder 435.

In order for the image encoder 400 to be applied in the video encoding apparatus 100, all elements of the image encoder 400, i.e., the inter predictor 415, the intra predictor 420, the transformer 425, the quantizer 430, the entropy encoder 435, the dequantizer 445, the inverse transformer 450, the de-blocker 455, and the SAO performer 460, perform operations based on each coding unit among coding units having a tree structure according to each LCU.

In particular, the intra predictor 410, the motion estimator 420, and the motion compensator 425 determine partitions and a prediction mode of each coding unit from among the coding units having a tree structure while considering the maximum size and the maximum depth of a current LCU, and the transformer 430 determines the size of the transformation unit in each coding unit from among the coding units having a tree structure.

Specifically, the intra predictor 420 and the inter predictor 415 may determine a partition mode and a prediction mode of each coding unit among the coding units having a tree structure in consideration of a maximum size and a maximum depth of a current LCU, and the transformer 425 may determine whether to split a transformation unit having a quad tree structure in each coding unit among the coding units having a tree structure.

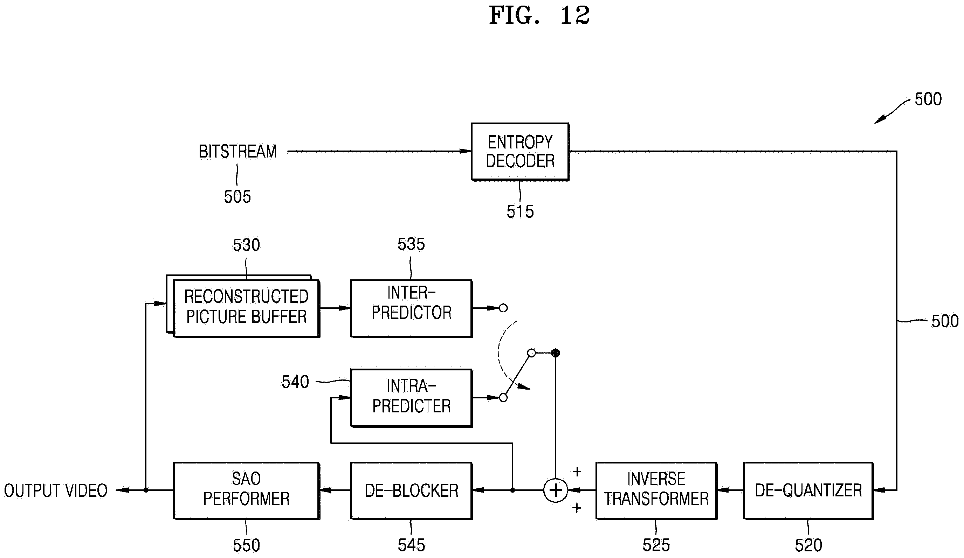

FIG. 12 is a block diagram of an image decoder 500 based on coding units, according to one or more embodiments.

An entropy decoder 515 parses encoded image data to be decoded and information about encoding required for decoding from a bitstream 505. The encoded image data is a quantized transformation coefficient from which residue data is reconstructed by a dequantizer 520 and an inverse transformer 525.

An intra predictor 540 performs intra prediction on coding units in an intra mode according to each prediction unit. An inter predictor 535 performs inter prediction on coding units in an inter mode from among the current image 405 for each prediction unit by using a reference image obtained from a reconstructed picture buffer 530.

Prediction data and residue data regarding coding units of each mode, which passed through the intra predictor 540 or the inter predictor 535, are summed, and thus data in a space domain regarding coding units of the current image 405 may be reconstructed, and the reconstructed data in the space domain may be output as a reconstructed image 560 through a de-blocker 545 and an SAO performer 550. Reconstructed images stored in the reconstructed picture buffer 530 may be output as reference images.

In order to decode the image data in the image data decoder 230 of the video decoding apparatus 200, operations after the entropy decoder 515 of the image decoder 500 according to an embodiment may be performed.

In order for the image decoder 500 to be applied in the video decoding apparatus 200 according to an embodiment, all elements of the image decoder 500, i.e., the entropy decoder 515, the dequantizer 520, the inverse transformer 525, the inter predictor 535, the de-blocker 545, and the SAO performer 550 may perform operations based on coding units having a tree structure for each LCU.

In particular, the intra-predictor 540 and the inter predictor 535 may determine a partition and a prediction mode for each of the coding units having a tree structure, and the inverse transformer 525 may determine whether to split a transformation unit having a quad tree structure for each of the coding units.

The encoding operation of FIG. 10 and the decoding operation of FIG. 11 correspond to a video stream encoding operation and a video stream decoding operation at a single layer. Therefore, if the encoding unit 12 of FIG. 1A encodes a video stream including two or more layers, the encoding unit 12 may include an image encoder 400 for each layer. Similarly, if the decoder 26 decodes a video stream including two or more layers, the decoding unit 26 may include an image decoder 500 for each layer.

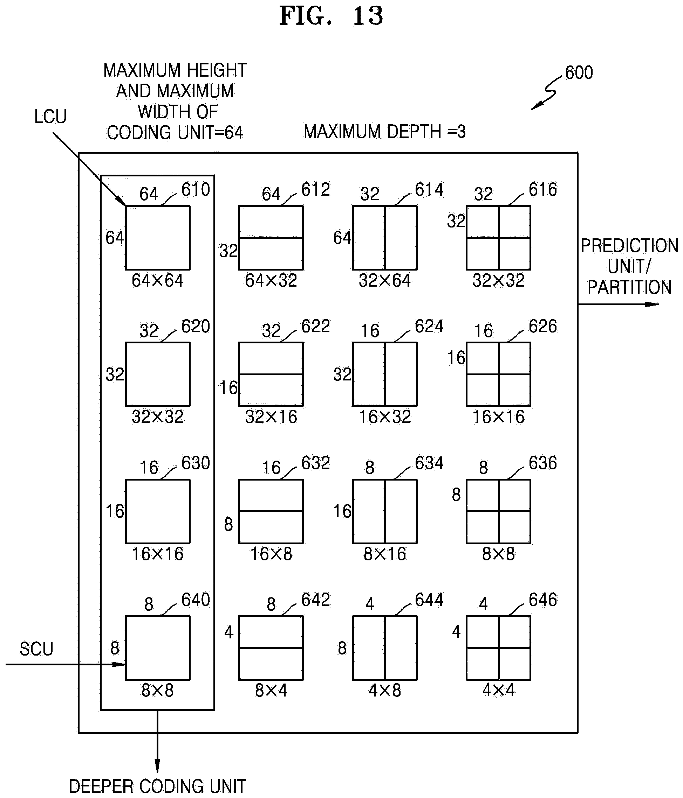

FIG. 13 is a diagram illustrating deeper coding units according to depths, and partitions, according to one or more embodiments.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to one or more embodiments, the maximum height and the maximum width of the coding units are each 64, and the maximum depth is 3. In this case, the maximum depth refers to a total number of times the coding unit is split from the LCU to the SCU. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a LCU in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16×16 and a depth of 2, and a coding unit 640 having a size of 8×8 and a depth of 3. The coding unit 640 having a size of 8×8 and a depth of 3 is an SCU.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoding unit 610, i.e. a partition 610 having a size of 64×64, partitions 612 having the size of 64×32, partitions 614 having the size of 32×64, or partitions 616 having the size of 32×32.

Similarly, a prediction unit of the coding unit 620 having the size of 32×32 and the depth of 1 may be split into partitions included in the coding unit 620, i.e. a partition 620 having a size of 32×32, partitions 622 having a size of 32×16, partitions 624 having a size of 16×32, and partitions 626 having a size of 16×16.

Similarly, a prediction unit of the coding unit 630 having the size of 16×16 and the depth of 2 may be split into partitions included in the coding unit 630, i.e. a partition having a size of 16×16 included in the coding unit 630, partitions 632 having a size of 16×8, partitions 634 having a size of 8×16, and partitions 636 having a size of 8×8.

Similarly, a prediction unit of the coding unit 640 having the size of 8×8 and the depth of 3 may be split into partitions included in the coding unit 640, i.e. a partition having a size of 8×8 included in the coding unit 640, partitions 642 having a size of 8×4, partitions 644 having a size of 4×8, and partitions 646 having a size of 4x4.

In order to determine a final depth of the coding units constituting the LCU 610, the coding unit determiner 120 of the video encoding apparatus 100 performs encoding for coding units corresponding to each depth included in the LCU 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the final depth and a partition mode of the coding unit 610.

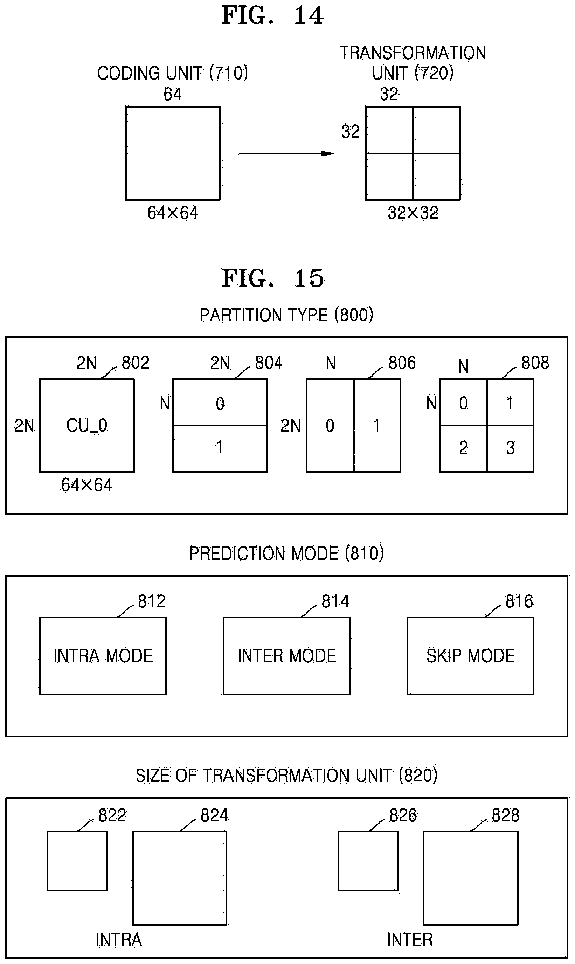

FIG. 14 is a diagram for describing a relationship between a coding unit 710 and transformation units 720, according to one or more embodiments.

The video encoding apparatus 100 or the video decoding apparatus 200 encodes or decodes an image according to coding units having sizes smaller than or equal to a LCU for each LCU. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16×16, 8×8, and 4×4, which are smaller than 64×64, and then a transformation unit having the least coding error may be selected.

FIG. 15 is a diagram for describing encoding information of coding units corresponding to a depth, according to one or more embodiments.

The outputter 130 of the video encoding apparatus 100 may encode and transmit information 800 about a partition mode, information 810 about a prediction mode, and information 820 about a size of a transformation unit for each coding unit corresponding to a final depth, as information about an encoding mode.

The information 800 indicates information about a mode of a partition obtained by splitting a prediction unit of a current coding unit, wherein the partition is a data unit for prediction encoding the current coding unit. For example, a current coding unit CU_0 having a size of 2N×2N may be split into any one of a partition 802 having a size of 2N×2N, a partition 804 having a size of 2N×N, a partition 806 having a size of N×2N, and a partition 808 having a size of N×N. Here, the information 800 about the partition mode is set to indicate one of the partition 804 having a size of 2N×N, the partition 806 having a size of N×2N, and the partition 808 having a size of N×N.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the information 800, 810, and 820 for decoding, according to each deeper coding unit.

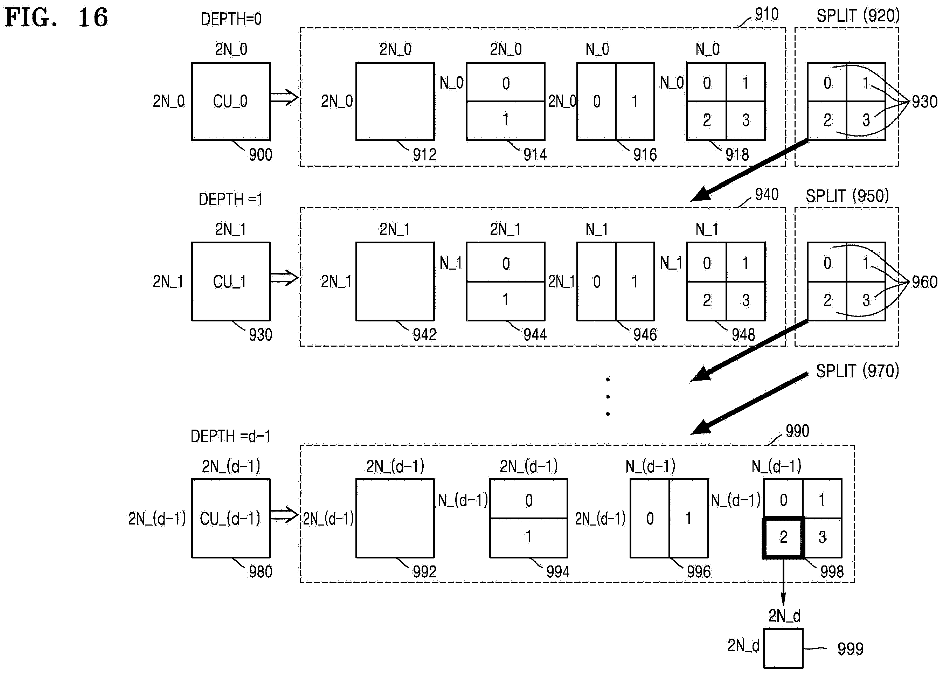

FIG. 16 is a diagram of deeper coding units according to depths, according to one or more embodiments.

Splitting information may be used to indicate a change of a depth. The spilt information indicates whether a coding unit of a current depth is split into coding units of a lower depth.

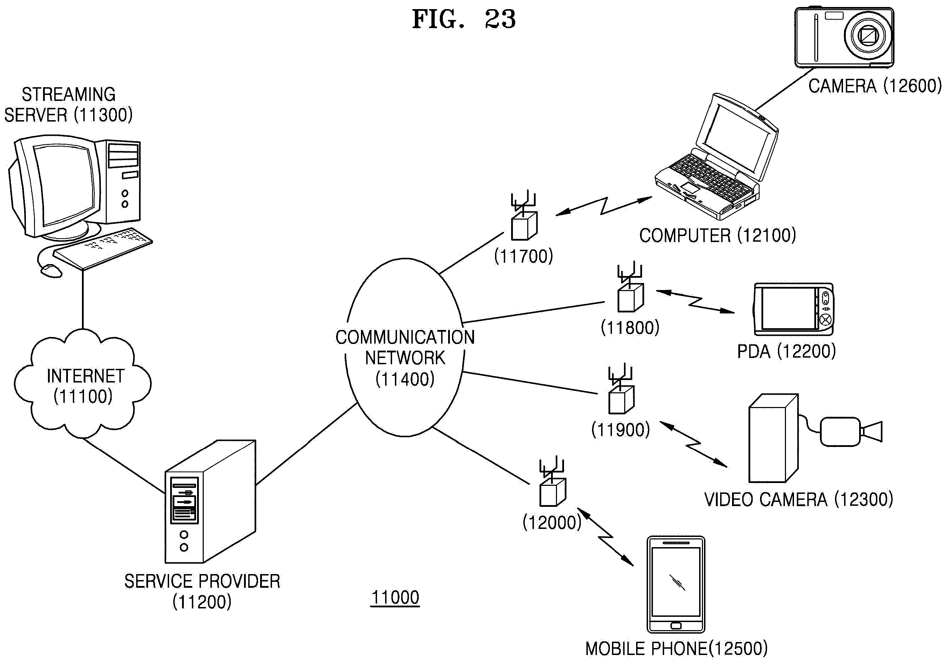

A prediction unit 910 for prediction encoding a coding unit 900 having a depth of 0 and a size of 2N_0×2N_0 may include partitions of a partition mode 912 having a size of 2N_0×2N_0, a partition mode 914 having a size of 2N_0×N_0, a partition mode 916 having a size of N_0×2N_0, and a partition mode 918 having a size of N_0×N_0. FIG. 23 only illustrates the partition modes 912 through 918 which are obtained by symmetrically splitting the prediction unit 910, but a partition mode is not limited thereto, and the partitions of the prediction unit 910 may include asymmetrical partitions, partitions having a predetermined shape, and partitions having a geometrical shape.

Prediction encoding is repeatedly performed on one partition having a size of 2N_0×2N_0, two partitions having a size of 2N_0×N_0, two partitions having a size of N_0×2N_0, and four partitions having a size of N_0×N_0, according to each partition mode. The prediction encoding in an intra mode and an inter mode may be performed on the partitions having the sizes of 2N_0×2N_0, N_0×2N_0, 2N_0×N_0, and N_0×N_0. The prediction encoding in a skip mode is performed only on the partition having the size of 2N_0×2N_0.

If an encoding error is smallest in one of the partition modes 912 through 916, the prediction unit 910 may not be split into a lower depth.

If the encoding error is the smallest in the partition mode 918, a depth is changed from 0 to 1 to split the partition mode 918 in operation 920, and encoding is repeatedly performed on coding units 930 having a depth of 2 and a size of N_0×N_0 to search for a minimum encoding error.

A prediction unit 940 for prediction encoding the coding unit 930 having a depth of 1 and a size of 2N_1×2N_1(=N_0×N_0) may include partitions of a partition mode 942 having a size of 2N_1×2N_1, a partition mode 944 having a size of 2N_1×N_1, a partition mode 946 having a size of N_1×2N_1, and a partition mode 948 having a size of N_1×N_1.

If an encoding error is the smallest in the partition mode 948, a depth is changed from 1 to 2 to split the partition mode 948 in operation 950, and encoding is repeatedly performed on coding units 960, which have a depth of 2 and a size of N_2×N_2 to search for a minimum encoding error.

When a maximum depth is d, split operation according to each depth may be performed up to when a depth becomes d-1, and splitting information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)×2N_(d-1) may include partitions of a partition mode 992 having a size of 2N_(d-1)×2N_(d-1), a partition mode 994 having a size of 2N-(d-1)×N_(d-1), a partition mode 996 having a size of N_(d-1)×2N_(d-1), and a partition mode 998 having a size of N_(d-1)×N_(d-1).

Prediction encoding may be repeatedly performed on one partition having a size of 2N_(d-1)×2N_(d-1), two partitions having a size of 2N_(d-1)×N_(d-1), two partitions having a size of N_(d-1)×2N_(d-1), four partitions having a size of N_(d-1)×N_(d-1) from among the partition modes 992 through 998 to search for a partition mode having a minimum encoding error.

Even when the partition mode 998 has the minimum encoding error, since a maximum depth is d, a coding unit CU_(d-1) having a depth of d-1 is no longer split to a lower depth, and a depth for the coding units constituting a current LCU 900 is determined to be d-1 and a partition mode of the current LCU 900 may be determined to be N_(d-1)×N_(d-1). Also, since the maximum depth is d and an SCU 980 having a lowermost depth of d-1 is no longer split to a lower depth, splitting information for the SCU 980 is not set.

A data unit 999 may be a 'minimum unit' for the current LCU. A minimum unit according to one or more embodiments may be a square data unit obtained by splitting an SCU 980 by 4. By performing the encoding repeatedly, the video encoding apparatus 100 may select a depth having the least encoding error by comparing encoding errors according to depths of the coding unit 900 to determine a depth, and set a corresponding partition mode and a prediction mode as an encoding mode of the depth.

As such, the minimum encoding errors according to depths are compared in all of the depths of 1 through d, and a depth having the least encoding error may be determined as a depth. The depth, the partition mode of the prediction unit, and the prediction mode may be encoded and transmitted as information about an encoding mode. Also, since a coding unit is split from a depth of 0 to a depth, only splitting information of the depth is set to 0, and splitting information of depths excluding the depth is set to 1.

The image data and encoding information extractor 220 of the video decoding apparatus 200 may extract and use the information about the depth and the prediction unit of the coding unit 900 to decode the partition 912. The video decoding apparatus 200 may determine a depth, in which splitting information is 0, as a depth by using splitting information according to depths, and use information about an encoding mode of the corresponding depth for decoding.

FIGS. 17, 18, and 19 are diagrams for describing a relationship between coding units 1010, prediction units 1060, and transformation units 1070, according to one or more embodiments.

The coding units 1010 are coding units having a tree structure, corresponding to depths determined by the video encoding apparatus 100, in a LCU. The prediction units 1060 are partitions of prediction units of each of the coding units 1010, and the transformation units 1070 are transformation units of each of the coding units 1010.

When a depth of a LCU is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition modes in the coding units 1014, 1022, 1050, and 1054 have a size of 2NxN, partition modes in the coding units 1016, 1048, and 1052 have a size of Nx2N, and a partition mode of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a LCU to determine an optimum coding unit, and thus coding units having a recursive tree structure may be obtained. Encoding information may include splitting information about a coding unit, information about a partition mode, information about a prediction mode, and information about a size of a transformation unit. Table 1 shows the encoding information that may be set by the video encoding and decoding apparatuses 100 and 200.

Table 1

| Splitting information 0 (Encoding on Coding Unit having Size of 2Nx2N and Current Depth of d) | | | | | Splitting information 1 |
|---|---|---|---|---|---|
| Prediction Mode | Partition mode | | Size of Transformation Unit | | |
| Intra<br><br>Inter | Symmetrical Partition mode | Asymmetrical Partition mode | Splitting information 0 of Transformation Unit | Splitting information 1 of Transformation Unit | Repeatedly Encode Coding Units having Lower Depth of d+1 |
| Skip (Only 2N×2N) | 2N×2N<br>2N×N<br>N×2N<br>N×N | 2N×nU<br>2N×nD<br>nL×2N<br>nR×2N | 2N×2N | N×N (Symmetrical Type)<br>N/2×N/2 (Asymmetrical Type) | |

The outputter 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Splitting information indicates whether a current coding unit is split into coding units of a lower depth. If splitting information of a current depth d is 0, a depth, in which a current coding unit is no longer split into a lower depth, is a final depth, and thus information about a partition mode, prediction mode, and a size of a transformation unit may be defined for the final depth. If the current coding unit is further split according to the splitting information, encoding is independently performed on four split coding units of a lower depth.

A prediction mode may be one of an intra mode, an inter mode, and a skip mode. The intra mode and the inter mode may be defined in all partition modes, and the skip mode is defined only in a partition mode having a size of 2N×2N.

The information about the partition mode may indicate symmetrical partition modes having sizes of 2N×2N, 2N×N, N×2N, and N×N, which are obtained by symmetrically splitting a height or a width of a prediction unit, and asymmetrical partition modes having sizes of 2N×nU, 2N×nD, nL×2N, and nR×2N, which are obtained by asymmetrically splitting the height or width of the prediction unit. The asymmetrical partition modes having the sizes of 2N×nU and 2N×nD may be respectively obtained by splitting the height of the prediction unit in 1:3 and 3:1, and the asymmetrical partition modes having the sizes of nL×2N and nR×2N may be respectively obtained by splitting the width of the prediction unit in 1:3 and 3:1

The size of the transformation unit may be set to be two types in the intra mode and two types in the inter mode. In other words, if splitting information of the transformation unit is 0, the size of the transformation unit may be 2N×2N, which is the size of the current coding unit. If splitting information of the transformation unit is 1, the transformation units may be obtained by splitting the current coding unit. Also, if a partition mode of the current coding unit having the size of 2N×2N is a symmetrical partition mode, a size of a transformation unit may be N×N, and if the partition mode of the current coding unit is an asymmetrical partition mode, the size of the transformation unit may be N/2×N/2.

The encoding information about coding units having a tree structure may include at least one of a coding unit corresponding to a depth, a prediction unit, and a minimum unit. The coding unit corresponding to the depth may include at least one of a prediction unit and a minimum unit containing the same encoding information.

Accordingly, it is determined whether adjacent data units are included in the same coding unit corresponding to the depth by comparing encoding information of the adjacent data units. Also, a corresponding coding unit corresponding to a depth is determined by using encoding information of a data unit, and thus a distribution of depths in a LCU may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

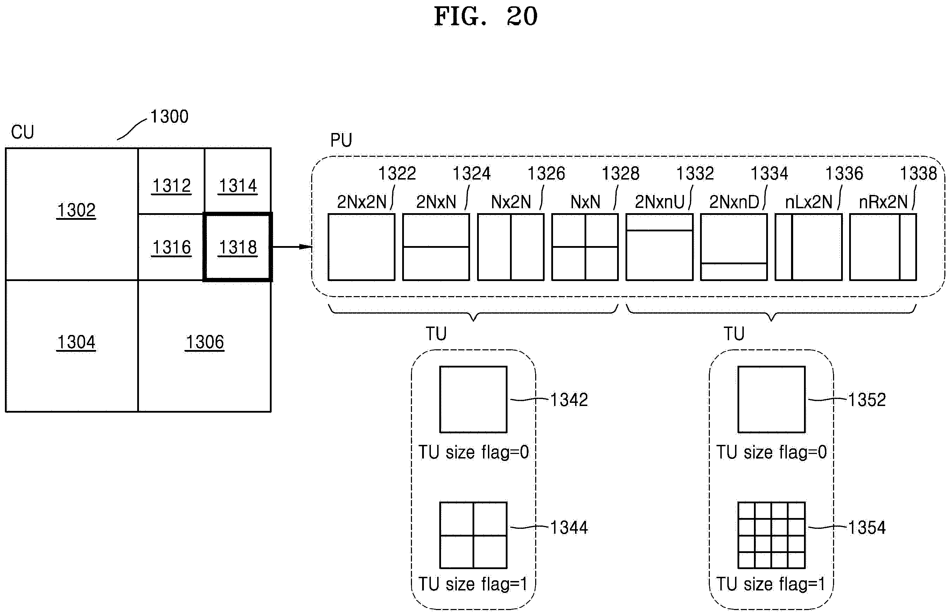

FIG. 20 is a diagram for describing a relationship between a coding unit, a prediction unit, and a transformation unit, according to encoding mode information of Table 1.

A LCU 1300 includes coding units 1302, 1304, 1306, 1312, 1314, 1316, and 1318 of depths. Here, since the coding unit 1318 is a coding unit of a depth, splitting information may be set to 0. Information about a partition mode of the coding unit 1318 having a size of 2N×2N may be set to be one of a partition mode 1322 having a size of 2N×2N, a partition mode 1324 having a size of 2N×N, a partition mode 1326 having a size of N×2N, a partition mode 1328 having a size of N×N, a partition mode 1332 having a size of 2N×nU, a partition mode 1334 having a size of 2N×nD, a partition mode 1336 having a size of nL×2N, and a partition mode 1338 having a size of nR×2N.

Splitting information (TU size flag) of a transformation unit is a type of a transformation index. The size of the transformation unit corresponding to the transformation index may be changed according to a prediction unit type or partition mode of the coding unit.

For example, when the partition mode is set to be symmetrical, i.e. the partition mode 1322, 1324, 1326, or 1328, a transformation unit 1342 having a size of 2N×2N is set if a TU size flag of a transformation unit is 0, and a transformation unit 1344 having a size of N×N is set if a TU size flag is 1.

When the partition mode is set to be asymmetrical, i.e., the partition mode 1332, 1334, 1336, or 1338, a transformation unit 1352 having a size of 2N×2N is set if a TU size flag is 0, and a transformation unit 1354 having a size of N/2×N/2 is set if a TU size flag is 1.

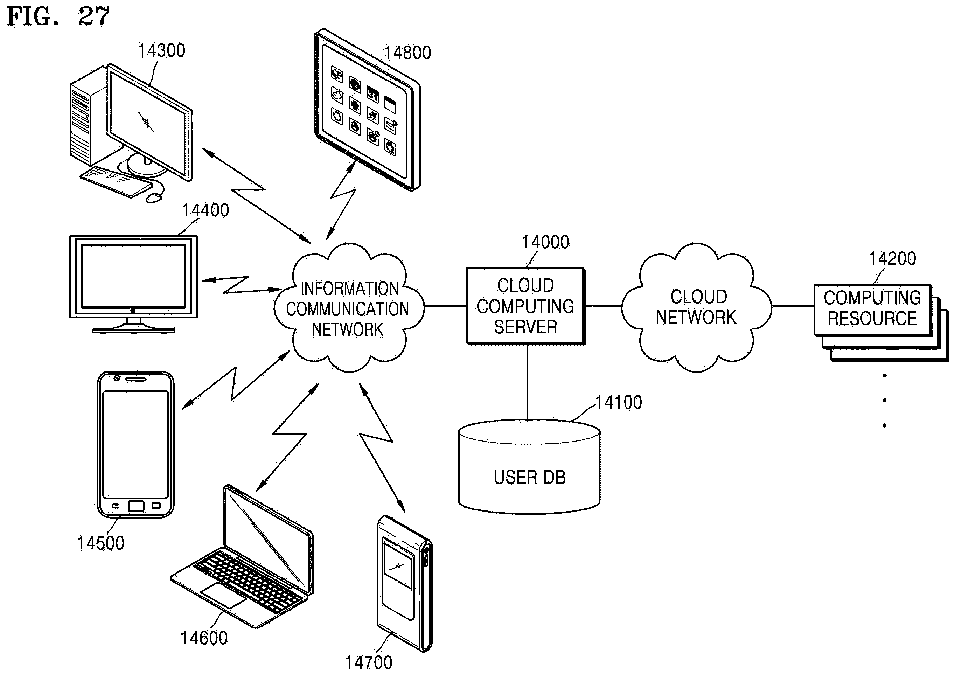

Referring to FIG. 27, the TU size flag is a flag having a value or 0 or 1, but the TU size flag is not limited to 1 bit, and a transformation unit may be hierarchically split having a tree structure while the TU size flag increases from 0. Splitting information (TU size flag) of a transformation unit may be an example of a transformation index.

In this case, the size of a transformation unit that has been actually used may be expressed by using a TU size flag of a transformation unit, according to one or more embodiments, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64×64 and a maximum transformation unit size is 32×32, (a-1) then the size of a transformation unit may be 32×32 when a TU size flag is 0, (a-2) may be 16×16 when the TU size flag is 1, and (a-3) may be 8×8 when the TU size flag is 2.

As another example, (b) if the size of the current coding unit is 32×32 and a minimum transformation unit size is 32×32, (b-1) then the size of the transformation unit may be 32×32 when the TU size flag is 0. Here, the TU size flag cannot be set to a value other than 0, since the size of the transformation unit cannot be less than 32×32.

As another example, (c) if the size of the current coding unit is 64×64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max(\text{MinTransformSize}, \text{RootTuSize}/(2^{\wedge}\text{MaxTransformSizeIndex})) \ldots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to one or more embodiments, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \ldots\ldots\ldots (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \ldots\ldots\ldots(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the embodiments are not limited thereto.

According to the video encoding method based on coding units having a tree structure as described with reference to FIGS. 15 through 27, image data of the space domain is encoded for each coding unit of a tree structure. According to the video decoding method based on coding units having a tree structure, decoding is performed for each LCU to reconstruct image data of the space domain. Thus, a picture and a video that is a picture sequence may be reconstructed. The reconstructed video may be reproduced by a reproducing apparatus, stored in a storage medium, or transmitted through a network.

The embodiments may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the interlayer video encoding method and/or the video encoding method, which is described above with reference to FIGS. 1A through 20, will be referred to as a 'video encoding method according to the one or more embodiments'. In addition, the interlayer video decoding method and/or the video decoding method, which is described above with reference to FIGS. 1A through 20, will be referred to as a 'video decoding method according to the one or more embodiments'.

Also, a video encoding apparatus including the interlayer video encoding apparatus 10, the interlayer video encoding apparatus 100, or the image encoder 400, which is described above with reference to FIGS. 1A through 20, will be referred to as a 'video encoding apparatus according to the one or more embodiments'. In addition, a video decoding apparatus including the interlayer video decoding apparatus 20, the video decoding apparatus 200, or the image decoder 500, which is described above with reference to FIGS. 1A through 20, will be referred to as a 'video decoding apparatus according to the one or more embodiments'.

A computer-readable recording medium storing a program, e.g., a disc 26000, according to one or more embodiments will now be described in detail.

FIG. 21 is a diagram of a physical structure of the disc 26000 in which a program is stored, according to one or more embodiments. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantization parameter determination method, the video encoding method, and the video decoding method described above may be assigned and stored.

A computer system embodied using a storage medium that stores a program for executing the video encoding method and the video decoding method as described above will now be described with reference to FIG. 29.

FIG. 22 is a diagram of a disc drive 26800 for recording and reading a program by using the disc 26000. A computer system 26700 may store a program that executes at least one of a video encoding method and a video decoding method according to one or more embodiments, in the disc 26000 via the disc drive 26800. To run the program stored in the disc 26000 in the computer system 26700, the program may be read from the disc 26000 and be transmitted to the computer system 26700 by using the disc drive 26700.

The program that executes at least one of a video encoding method and a video decoding method according to one or more embodiments may be stored not only in the disc 26000 illustrated in FIG. 21 or 22 but also in a memory card, a ROM cassette, or a solid state drive (SSD).

A system to which the video encoding method and a video decoding method described above are applied will be described below.

FIG. 23 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 31, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to one or more embodiments.

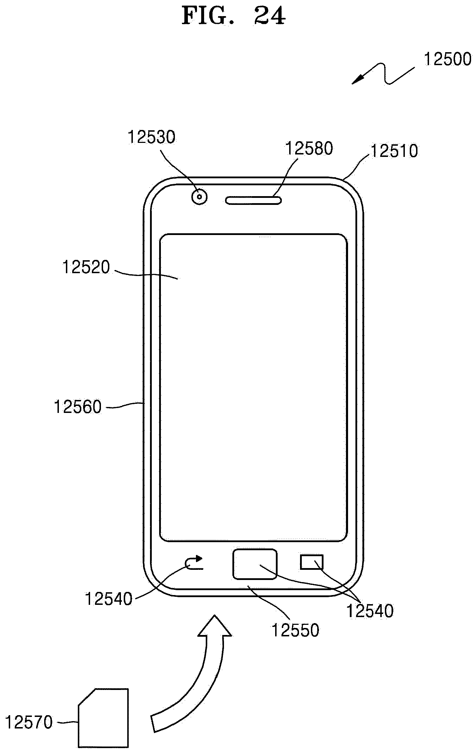

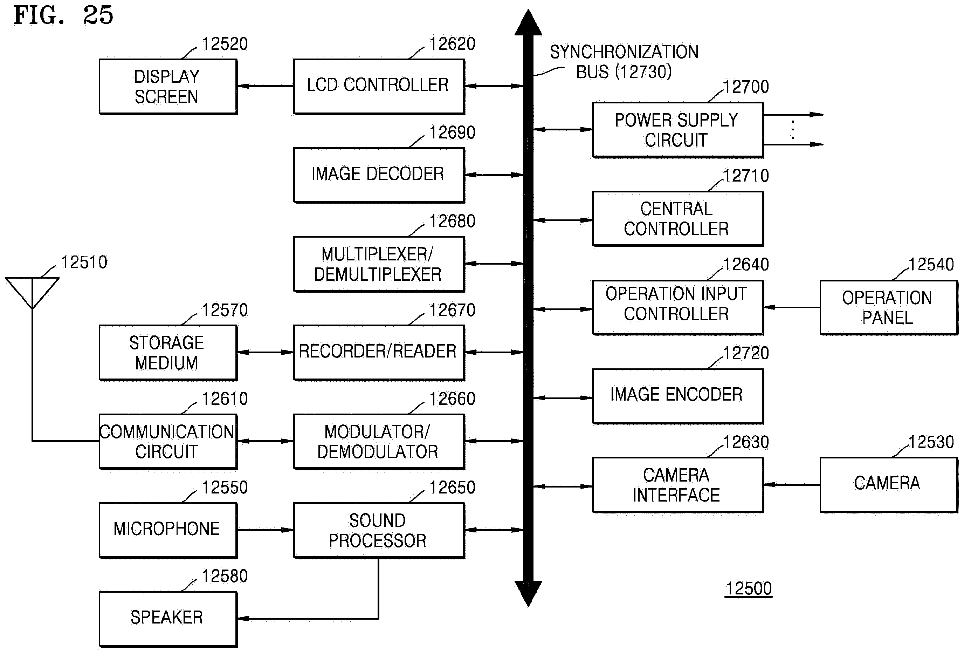

The mobile phone 12500 included in the content supply system 11000 according to one or more embodiments will now be described in greater detail with referring to FIGS. 24 and 25.

FIG. 24 illustrates an external structure of the mobile phone 12500 to which a video encoding method and a video decoding method are applied, according to one or more embodiments. The mobile phone 12500 may be a smart phone, the functions of which are not limited and a large number of the functions of which may be changed or expanded.

The mobile phone 12500 includes an internal antenna 12510 via which a radiofrequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound outputter, and a microphone 12550 for inputting voice and sound or another type sound inputter. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 25 illustrates an internal structure of the mobile phone 12500, according to one or more embodiments. To systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recorder/reader 12670, a modulator/demodulator 12660, and a sound processor 12650 are connected to a central controller 12710 via a synchronization bus 12730.

If a user operates a power button and sets from a 'power off' state to a 'power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulator/demodulator 12660 under control of the central controller 12710, the modulator/demodulator 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulator/demodulator 12660 and the communication circuit 12610, and may be transmitted via the antenna 12510.

When a text message, e.g., email, is transmitted in a data communication mode, text data of the text message is input via the operation panel 12540 and is transmitted to the central controller 12710 via the operation input controller 12640. Under control of the central controller 12710, the text data is transformed into a transmission signal via the modulator/demodulator 12660 and the communication circuit 12610 and is transmitted to the wireless base station 12000 via the antenna 12510.

To transmit image data in the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the above-described video encoding method according to the one or more embodiments. The image encoder 12720 may transform the image data received from the camera 12530 into compressed and encoded image data based on the above-described video encoding method according to the one or more embodiments, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulator/demodulator 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulator/demodulator 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulator/demodulator 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulator/demodulator 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoder 12690 may correspond to that of the above-described video decoding method according to the one or more embodiments. The image decoder 12690 may decode the encoded video data to obtain reconstructed video data and provide the reconstructed video data to the display screen 12520 via the LCD controller 12620, by using the above-described video decoding method according to the one or more embodiments.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to one or more embodiments, may be a transceiving terminal including only the video encoding apparatus, or may be a transceiving terminal including only the video decoding apparatus.

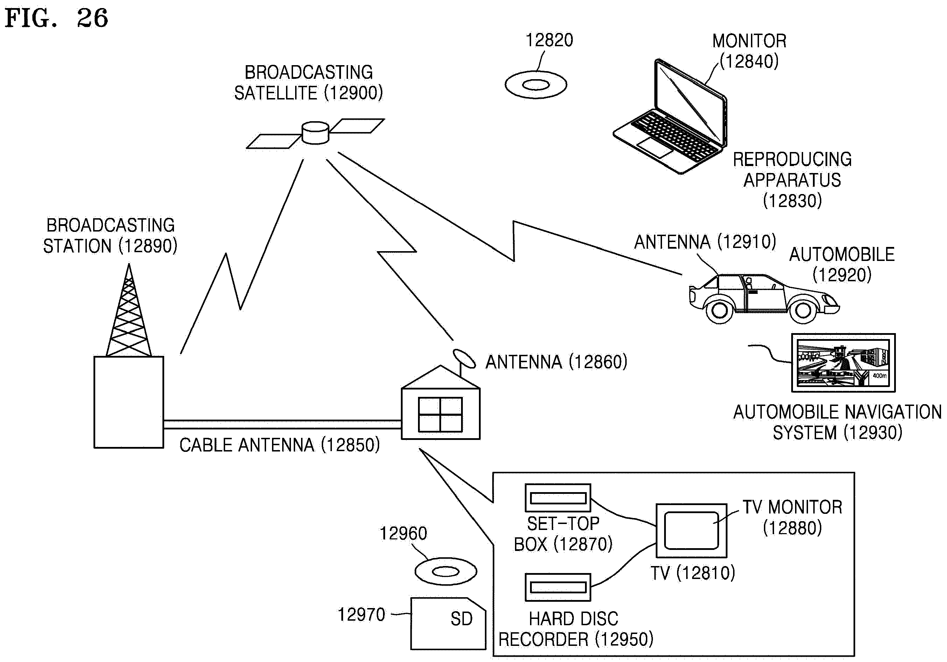

A communication system according to the one or more embodiments is not limited to the communication system described above with reference to FIG. 24. For example, FIG. 26 illustrates a digital broadcasting system employing a communication system, according to one or more embodiments. The digital broadcasting system of FIG. 26 may receive a digital broadcast transmitted via a satellite or a terrestrial network by using a video encoding apparatus and a video decoding apparatus according to one or more embodiments.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to one or more embodiments is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to one or more embodiments may be installed. Data output from the set-top box 12870 may also be reproduced on a TV monitor 12880.

As another example, a video decoding apparatus according to one or more embodiments may be installed in the TV receiver 12810 instead of the set-top box 12870.

An automobile 12920 that has an appropriate antenna 12910 may receive a signal transmitted from the satellite 12900 or the wireless base station 11700 of FIG. 21. A decoded video may be reproduced on a display screen of an automobile navigation system 12930 installed in the automobile 12920.

A video signal may be encoded by a video encoding apparatus according to one or more embodiments and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to one or more embodiments, a video signal recorded on the DVD disc 12960, the SD card 12970, or another storage medium may be reproduced on the TV monitor 12880.

The automobile navigation system 12930 may not include the camera 12530 of FIG. 32, and the camera interface 12630 and the image encoder 12720 of FIG. 32. For example, the computer 12100 and the TV receiver 12810 may not include the camera 12530, the camera interface 12630, and the image encoder 12720.

FIG. 27 is a diagram illustrating a network structure of a cloud computing system using a video encoding apparatus and a video decoding apparatus, according to one or more embodiments.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 31.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include a video decoding apparatus as described above with reference to FIGS. 1A through 20. As another example, the user terminal may include a video encoding apparatus as described above with reference to FIGS. 1A through 20. Alternatively, the user terminal may include both the video decoding apparatus and the video encoding apparatus as described above with reference to FIGS. 1A through 20.

Various applications of a video encoding method, a video decoding method, a video encoding apparatus, and a video decoding apparatus according to the one or more embodiments described above with reference to FIGS. 1A through 20 have been described above with reference to FIGS. 21 to 27. However, methods of storing the video encoding method and the video decoding method in a storage medium or methods of implementing the video encoding apparatus and the video decoding apparatus in a device, according to various embodiments, are not limited to the embodiments described above with reference to FIGS. 21 to 27.

It should be understood that the exemplary embodiments described therein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the scope of the present invention as defined by the following claims.

**Claims**

1. An interlayer video decoding method comprising:

   determining (11) whether to perform illumination compensation with respect to a current block (40) of a second layer to be reconstructed by using a reference block (45) of a first layer;
   determining (13) a reference pixel of the first layer as an integer pixel closest to a sub-pixel location of the first layer, indicated by a disparity vector of the current block (40) of the second layer, among integer pixels located at upper-left side, upper-right side, lower-left side and lower-right side of the sub-pixel location, wherein the disparity vector is a vector indicating the difference between location of the current block of the second layer and the reference block of the first layer having a fractional unit precision; and
   determining (15) illumination compensation parameters for the current block of the second layer based on the reference pixel of the first layer and pixels surrounding the current block (40) of the second layer.

2. The interlayer video decoding method of claim 1, wherein the determining the reference pixel of the first layer comprises:

   transforming the disparity vector to an integer disparity vector; and
   determining a location indicated by the integer disparity vector as a location of the reference pixel of the first layer.

3. The interlayer video decoding method of claim 2, wherein the transforming the disparity vector to the integer disparity vector comprises transforming the disparity vector to indicate an integer pixel by performing a shift calculation with respect to coordinates of the location of the reference pixel of the first layer indicated by the disparity vector.

4. The interlayer video decoding method of claim 1, wherein the determining the reference pixel of the first layer comprises:

   determining the closest integer pixel to a location of the reference pixel of the first layer corresponding to a location of a pixel at the upper-left corner of the current block (40) of the second layer as a location of a pixel at the upper-left corner of the reference block (45) of the first layer; and
   determining pixels surrounding the reference block (45) of the first layer as reference pixels (47) of the first layer.

5. An interlayer video decoding apparatus (20) comprising:

   a illumination compensation determiner (16), which determines whether to perform illumination compensation with respect to a current block (40) of a second layer to be reconstructed by using a reference block (45) of a first layer;
   a reference pixel determiner (17), which determines a reference pixel of the first layer as an integer pixel closest to a sub-pixel location of the first layer, indicated by a disparity vector of the current block (40) of the second layer, among integer pixels located at upper-left side, upper-right side, lower-left side and lower-right side of the sub-pixel location, wherein the disparity vector is a vector indicating the difference between location of the current block of the second layer and the reference block of the first layer having a fractional unit precision; and a illumination compensation parameters determining unit (18), which determines illumination compensation parameters for the current block (40) of the second layer based on the reference pixel of the first layer and pixels surrounding the current block (40) of the second layer.

**Patentansprüche**

1. Zwischenschicht-Videodecodierungsverfahren, umfassend:

   Bestimmen (11), ob eine Beleuchtungskompensation in Bezug auf einen aktuellen Block (40) einer zweiten Schicht durchgeführt werden soll, der unter Verwendung eines Referenzblocks (45) einer ersten Schicht rekonstruiert werden soll;
   Bestimmen (13) eines Referenzpixels der ersten Schicht als ein einem Subpixelort der ersten Schicht am nächsten liegendes ganzzahliges Pixel unter ganzzahligen Pixeln, die sich auf der oberen linken Seite, der oberen rechten Seite, der unteren linken Seite und der unteren rechten Seite des Subpixelortes befinden, was durch einen Disparitätsvektor des aktuellen Blocks (40) der zweiten Schicht angegeben wird, wobei der Disparitätsvektor ein Vektor ist, der die Differenz zwischen dem Ort des aktuellen Blocks der zweiten Schicht und dem Referenzblock der ersten Schicht mit einer Genauigkeit von Bruchteilen angibt; und
   Bestimmen von (15) Beleuchtungskompensationsparametern für den aktuellen Block der zweiten Schicht basierend auf dem Referenzpixel der ersten Schicht und den Pixeln, die den aktuellen Block (40) der zweiten Schicht umgeben.

2. Zwischenschicht-Videodecodierungsverfahren nach Anspruch 1, wobei das Bestimmen des Referenzpixels der ersten Schicht Folgendes umfasst:

   Transformieren des Disparitätsvektors in einen ganzzahligen Disparitätsvektor; und
   Bestimmen eines durch den ganzzahligen Disparitätsvektor angegebenen Ortes als Ort des Referenzpixels der ersten Schicht.

3. Zwischenschicht-Videodecodierungsverfahren nach Anspruch 2, wobei das Transformieren des Disparitätsvektors in den ganzzahligen Disparitätsvektor das Transformieren des Disparitätsvektors zum Angeben eines ganzzahligen Pixels durch Durchführen einer Verschiebungsberechnung in Bezug auf Koordinaten des Ortes des Referenzpixels der ersten Schicht umfasst, was durch den Disparitätsvektor angegeben wird.

4. Zwischenschicht-Videodecodierungsverfahren nach Anspruch 1, wobei das Bestimmen des Referenzpixels der ersten Schicht Folgendes umfasst:

   Bestimmen des zu einem Ort des Referenzpixels der ersten Schicht am nächsten liegenden ganzzahligen Pixels, der einem Ort eines Pixels in der oberen linken Ecke des aktuellen Blocks (40) der zweiten Schicht entspricht, als ein Ort eines Pixels in der oberen linken Ecke des Referenzblocks (45) der ersten Schicht; und
   Bestimmen von Pixeln, die den Referenzblock (45) der ersten Schicht umgeben, als Referenzpixel (47) der ersten Schicht.

5. Zwischenschicht-Videodecodiervorrichtung (20), umfassend:

   einen Beleuchtungskompensationsbestimmer (16), der bestimmt, ob eine Beleuchtungskompensation in Bezug auf einen aktuellen Block (40) einer zweiten Schicht durchgeführt werden soll, der unter Verwendung eines Referenzblocks (45) einer ersten Schicht rekonstruiert werden soll;
   einen Referenzpixel-Bestimmer (17), der ein Referenzpixel der ersten Schicht als ein ganzzahliges Pixel unter ganzzahligen Pixeln, die sich auf der oberen linken Seite, der oberen rechten Seite, der unteren linken Seite und der unteren rechten Seite der Subpixelposition befinden, bestimmt, das einem Subpixelort der ersten Schicht am nächsten liegt, was durch einen Disparitätsvektor des aktuellen Blocks (40) der zweiten Schicht angegeben wird, wobei der Disparitätsvektor ein Vektor ist, der die Differenz zwischen dem Ort des aktuellen Blocks der zweiten Schicht und dem Referenzblock der ersten Schicht mit einer Bruchteilsgenauigkeit angibt; und
   eine Beleuchtungskompensationsparameter-Bestimmungseinheit (18), die Beleuchtungskompensationsparameter für den aktuellen Block (40) der zweiten Schicht basierend auf dem Referenzpixel der ersten Schicht und den Pixeln, die den aktuellen Block (40) der zweiten Schicht umgeben, bestimmt.

**Revendications**

1. Procédé de décodage vidéo intercouche comprenant :

le fait de déterminer (11) s'il faut effectuer une compensation d'éclairage par rapport à un bloc courant (40) d'une seconde couche à reconstruire en utilisant un bloc de référence (45) d'une première couche ;
la détermination (13) d'un pixel de référence de la première couche en tant que pixel entier le plus proche d'un emplacement de sous-pixel de la première couche, indiqué par un vecteur de disparité du bloc courant (40) de la seconde couche, parmi des pixels entiers situés au niveau du côté supérieur gauche, du côté supérieur droit, du côté inférieur gauche et du côté inférieur droit de l'emplacement de sous-pixel, dans lequel le vecteur de disparité est un vecteur indiquant la différence entre l'emplacement du bloc courant de la seconde couche et le bloc de référence de la première couche ayant une précision unitaire fractionnaire ; et
la détermination (15) de paramètres de compensation d'éclairage pour le bloc courant de la seconde couche sur la base du pixel de référence de la première couche et de pixels entourant le bloc courant (40) de la seconde couche.

2. Procédé de décodage vidéo intercouche selon la revendication 1, dans lequel la détermination du pixel de référence de la première couche comprend :

la transformation du vecteur de disparité en un vecteur de disparité entier ; et
la détermination d'un emplacement indiqué par le vecteur de disparité entier en tant qu'emplacement du pixel de référence de la première couche.

3. Procédé de décodage vidéo intercouche selon la revendication 2, dans lequel la transformation du vecteur de disparité en vecteur de disparité entier comprend la transformation du vecteur de disparité pour indiquer un pixel entier en effectuant un calcul de décalage par rapport aux coordonnées de l'emplacement du pixel de référence de la première couche indiqué par le vecteur de disparité.

4. Procédé de décodage vidéo intercouche selon la revendication 1, dans lequel la détermination du pixel de référence de la première couche comprend :

la détermination du pixel entier le plus proche d'un emplacement du pixel de référence de la première couche correspondant à un emplacement d'un pixel au niveau du coin supérieur gauche du bloc courant (40) de la seconde couche en tant qu'emplacement d'un pixel au niveau du coin supérieur gauche du bloc de référence (45) de la première couche ; et
la détermination de pixels entourant le bloc de référence (45) de la première couche en tant que pixels de référence (47) de la première couche.

5. Appareil de décodage vidéo intercouche (20) comprenant :

un dispositif de détermination de compensation d'éclairage (16), qui détermine s'il faut effectuer une compensation d'éclairage par rapport à un bloc courant (40) d'une seconde couche à reconstruire en utilisant un bloc de référence (45) d'une première couche ;
un dispositif de détermination de pixel de référence (17), qui détermine un pixel de référence de la première couche en tant que pixel entier le plus proche d'un emplacement de sous-pixel de la première couche, indiqué par un vecteur de disparité du bloc courant (40) de la seconde couche, parmi des pixels entiers situés au niveau du côté supérieur gauche, du côté supérieur droit, du côté inférieur gauche et du côté inférieur droit de l'emplacement de sous-pixel, dans lequel le vecteur de disparité est un vecteur indiquant la différence entre l'emplacement du bloc courant de la seconde couche et le bloc de référence de la première couche ayant une précision unitaire fractionnaire ; et
une unité de détermination de paramètres de compensation d'éclairage (18), qui détermine des paramètres de compensation d'éclairage pour le bloc courant (40) de la seconde couche sur la base du pixel de référence de la première couche et de pixels entourant le bloc courant (40) de la seconde couche.

# FIG. 1A

10

12

FIRST LAYER
ENCODER

14

| BRIGHTNESS COMPENSATION DETERMINER | REFERENCE PIXEL DETERMINER | BRIGHTNESS COMPENSATION MODE DETERMINER |

16   17   18

SECOND LAYER ENCODER

# FIG. 1B

START

DETERMINE WHETHER TO PERFORM BRIGHTNESS COMPENSATION WITH RESPECT TO SECOND LAYER CURRENT BLOCK TO BE RECONSTRUCTED BY USING FIRST LAYER REFERENCE BLOCK

11

DETERMINE FIRST LAYER REFERENCE PIXELS BY USING LOCATION OF CLOSEST INTEGER PIXEL TO REFERENCE LOCATION OF FIRST LAYER CORRESPONDING TO LOCATION OF REFERENCE PIXEL FOR SECOND LAYER CURRENT BLOCK

13

DETERMINE BRIGHTNESS COMPENSATION PARAMETERS REGARDING SECOND LAYER CURRENT BLOCK BY USING DETERMINED FIRST LAYER REFERENCE PIXEL AND PIXELS SURROUNDING SECOND LAYER CURRENT BLOCK

15

END

# FIG. 2A

```
                                              ~20
                              22
                    ┌──────────────┐
              ──────▶│ FIRST LAYER  │──────▶
                    │   DECODER    │
                    └──────────────┘
                                                        24
     ┌──────────────────────────────────────────────────┐
     │  ┌────────────┐  ┌────────────┐  ┌──────────────┐ │
     │  │ BRIGHTNESS │  │ REFERENCE  │  │  BRIGHTNESS  │ │
  ───┼─▶│COMPENSATION│─26│   PIXEL    │─27│ COMPENSATION │─28
     │  │ DETERMINER │  │ DETERMINER │  │     MODE     │ │──▶
     │  └────────────┘  └────────────┘  │  DETERMINER  │ │
  ───┼─▶                                └──────────────┘ │
     │              SECOND LAYER DECODER                  │
     └──────────────────────────────────────────────────┘
```

# FIG. 2B

```
                    ( START )
                        │
                        ▼
  ┌───────────────────────────────────────────────┐
  │ DETERMINE WHETHER TO PERFORM BRIGHTNESS        │
  │ COMPENSATION WITH RESPECT TO SECOND LAYER      │──21
  │ CURRENT BLOCK TO BE RECONSTRUCTED BY           │
  │ USING FIRST LAYER REFERENCE BLOCK              │
  └───────────────────────────────────────────────┘
                        │
                        ▼
  ┌───────────────────────────────────────────────┐
  │ DETERMINE FIRST LAYER REFERENCE PIXELS BY      │
  │ USING LOCATION OF CLOSEST INTEGER PIXEL        │
  │ TO REFERENCE LOCATION OF FIRST LAYER           │──23
  │ CORRESPONDING TO LOCATION OF REFERENCE         │
  │ PIXEL FOR SECOND LAYER CURRENT BLOCK           │
  └───────────────────────────────────────────────┘
                        │
                        ▼
  ┌───────────────────────────────────────────────┐
  │ DETERMINE BRIGHTNESS COMPENSATION              │
  │ PARAMETERS REGARDING SECOND LAYER              │
  │ CURRENT BLOCK BY USING DETERMINED FIRST        │──25
  │ LAYER REFERENCE PIXEL AND PIXELS               │
  │ SURROUNDING SECOND LAYER CURRENT BLOCK         │
  └───────────────────────────────────────────────┘
                        │
                        ▼
                    (  END  )
```

FIG. 3

EP 2 983 362 B1

# FIG. 4A

41

42

40

CURRENT BLOCK

# FIG. 4B

46    47

45

REFERENCE BLOCK

# FIG. 5A

50    51

52    53

⬤ INTEGER PIXEL LOCATION

◯ SUB-PIXEL LOCATION

# FIG. 5B

# FIG. 6A

START

OBTAIN DISPARITY VECTOR INDICATING REFERENCE
LOCATION OF FIRST LAYER CORRESPONDING TO
LOCATIONS OF REFERENCE PIXELS FOR SECOND
LAYER CURRENT BLOCK TO BE BRIGHTNESS
COMPENSATED — 61

DETERMINING LOCATION OF CLOSEST INTEGER
PIXELS TO REFERENCE LOCATION OF FIRST LAYER
INDICATED BY OBTAINED DISPARITY VECTOR — 62

DETERMINE FIRST LAYER REFERENCE BLOCK
CORRESPONDING TO THE DETERMINED
INTEGER PIXEL LOCATION — 63

DETERMINE PIXELS SURROUNDING DETERMINED
FIRST LAYER REFERENCE BLOCK AS LOCATIONS
OF FIRST LAYER REFERENCE PIXELS — 64

DETERMINE BRIGHTNESS COMPENSATION
PARAMETERS BY USING DETERMINED FIRST LAYER
REFERENCE PIXEL AND PIXELS SURROUNDING
SECOND LAYER CURRENT BLOCK — 65

END

# FIG. 6B

START

OBTAIN DISPARITY VECTOR INDICATING REFERENCE LOCATION OF FIRST LAYER CORRESPONDING TO LOCATIONS OF REFERENCE PIXELS FOR SECOND LAYER CURRENT BLOCK TO BE BRIGHTNESS COMPENSATED — 66

DETERMINING LOCATION OF CLOSEST INTEGER PIXELS TO REFERENCE LOCATION OF FIRST LAYER INDICATED BY OBTAINED DISPARITY VECTOR — 67

DETERMINE LOCATIONS OF DETERMINED INTEGER PIXELS AS LOCATIONS OF REFERENCE PIXELS — 68

INDUCE BRIGHTNESS COMPENSATION PARAMETERS BY USING DETERMINED FIRST LAYER REFERENCE PIXEL AND PIXELS SURROUNDING SECOND LAYER CURRENT BLOCK — 69

END

# FIG. 7

```
START
```

OBTAIN DISPARITY VECTOR INDICATING REFERENCE
LOCATION OF FIRST LAYER CORRESPONDING TO
LOCATIONS OF PIXELS SURROUNDING A SECOND
LAYER CURRENT BLOCK TO BE BRIGHTNESS
COMPENSATED ──71

DETERMINING CLOSEST INTEGER PIXEL TO
REFERENCE LOCATION OF FIRST LAYER
INDICATED BY OBTAINED DISPARITY VECTOR ──72

DETERMINE REFERENCE PIXEL VALUES OF
REFERENCE LOCATION OF FIRST LAYER BY USING
OBTAINED AT LEAST ONE INTEGER PIXEL ──73

INDUCE BRIGHTNESS COMPENSATION
PARAMETERS BY USING DETERMINED FIRST
LAYER EFERENCE PIXEL AND PIXELS
SURROUNDING SECOND LAYER CURRENT BLOCK ──74

```
END
```

## FIG. 8

## FIG. 9

# FIG. 10

| | | | |
|---|---|---|---|
| 64<br>64×64 | 64<br>64×32 | 32<br>32×64 | 32<br>32×32 |
| 32<br>32×32 | 32<br>32×16 | 16<br>16×32 | 16<br>16×16 |
| 16<br>16×16 | 16<br>16×8 | 8<br>8×16 | 8<br>8×8 |
| 8<br>8×8 | 8<br>8×4 | 4<br>4×8 | 4<br>4×4 |

315

335  325

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

# FIG. 11

EP 2 983 362 B1

# FIG. 12

EP 2 983 362 B1

# FIG. 13

MAXIMUM HEIGHT
AND MAXIMUM
WIDTH OF
CODING UNIT=64          MAXIMUM DEPTH =3                    600

LCU

64 — 610          64 — 612          32 — 614          32 — 616

64              32                64                32

64×64            64×32            32×64            32×32

32 — 620          32 — 622          16 — 624          16 — 626

32              16                32                16

32×32            32×16            16×32            16×16

16 — 630          16 — 632          8 — 634           8 — 636

16              8                 16                8

16×16            16×8             8×16             8×8

8 — 640           8 — 642           4 — 644           4 — 646

8               4                 8                 4

8×8              8×4              4×8              4×4

SCU

PREDICTION
UNIT/
PARTITION

DEEPER CODING UNIT

# FIG. 14

CODING UNIT (710)

64

64×64

TRANSFORMATION UNIT (720)

32

32

32×32

# FIG. 15

PARTITION TYPE (800)

2N ⟋802

2N

CU_0

64×64

2N ⟋804

N

0

1

N ⟋806

2N

0 | 1

N ⟋808

N

0 | 1

2 | 3

PREDICTION MODE (810)

⟋812

INTRA MODE

⟋814

INTER MODE

⟋816

SKIP MODE

SIZE OF TRANSFORMATION UNIT (820)

⟋822   ⟋824

INTRA

⟋826   ⟋828

INTER

# FIG. 16

DEPTH=0

DEPTH =1

DEPTH =d-1

FIG. 17

CODING UNIT (1010)

FIG. 18

PREDICTION UNIT (1060)

# FIG. 19

TRANSFORMATION UNIT (1070)

# FIG. 20

EP 2 983 362 B1

# FIG. 21

Se

Tr

DISC (26000)

# FIG. 22

26700

26800

26000

# FIG. 23

STREAMING
SERVER (11300)

INTERNET
(11100)

SERVICE PROVIDER
(11200)

COMMUNICATION
NETWORK
(11400)

11000

(11700)

(11800)

(11900)

(12000)

CAMERA (12600)

COMPUTER (12100)

PDA (12200)

VIDEO CAMERA (12300)

MOBILE PHONE(12500)

EP 2 983 362 B1

# FIG. 24

12500

12530
12580
12510

12520

12560

12540

12550

12540

12570

## FIG. 25

SYNCHRONIZATION BUS (12730)

12500

## FIG. 26

BROADCASTING
SATELLITE (12900)

12820

MONITOR
(12840)

REPRODUCING
APPARATUS
(12830)

BROADCASTING
STATION (12890)

ANTENNA (12910)

AUTOMOBILE
(12920)

ANTENNA (12860)

AUTOMOBILE NAVIGATION
SYSTEM (12930)

CABLE ANTENNA (12850)

12960

SET-TOP
BOX (12870)

TV MONITOR
(12880)

12970 — SD

TV (12810)

HARD DISC
RECORDER (12950)

**FIG. 27**

EP 2 983 362 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3D-HEVC Test Model 2. *JCT-3V meeting; 102nd MPEG meeting,* 13 October 2012